(19) Europäisches Patentamt
European Patent Office
Office européen des brevets

(11) **EP 2 869 249 A1**

(12) **EUROPEAN PATENT APPLICATION**
published in accordance with Art. 153(4) EPC

(43) Date of publication:
06.05.2015 Bulletin 2015/19

(51) Int Cl.:
*G06Q 10/04* $^{(2012.01)}$

(21) Application number: 13810593.7

(86) International application number:
PCT/JP2013/067386

(22) Date of filing: 25.06.2013

(87) International publication number:
WO 2014/003001 (03.01.2014 Gazette 2014/01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 27.06.2012 JP 2012144415
27.06.2012 JP 2012144416

(71) Applicant: Yanmar Co., Ltd.
Osaka-shi, Osaka 530-8311 (JP)

(72) Inventor: NAGAKURA, Katsuhiko
Osaka-shi
Osaka 530-0014 (JP)

(74) Representative: Thibon, Laurent
Cabinet Beaumont
1, rue Champollion
38000 Grenoble (FR)

(54) **PREDICTION DEVICE, PREDICTION METHOD, AND COMPUTER PROGRAMME**

(57) Provided are a prediction device, a prediction method, and a computer program, related to prediction method using Taguchi-method, and which reflect, in addition to a time difference model, trends, in changes over time, thus further improving prediction accuracy.

For example, the prediction device selects, from signal values stored in a time series and data for each item, a period based on the MD of the data for each item and the trend of the MD, namely a signal period in which the data for each item is similar, and carries out a prediction using Taguchi-method on the signal values and data for each item in the selected period.

FIG. 16

## Description

### Technical Field

The present invention relates to a method for analyzing an object to be predicted that varies chronologically as well as a plurality of items regarding the object to be predicted and, in particular, to a prediction device, a prediction method, and a computer program for allowing a computer to function as a prediction device wherein the precision of the predictive results can be improved.

### Background Art

Economic prediction such as the prediction of the demand for products and the prediction of amount of sales are extremely important in order to investigate management direction and company strategy. In addition, how the predicted demand is connected to the plan of each company department, such as the sales, inventory, production, distribution, and development departments, has become an issue that management must consider. Furthermore, prediction of the following events using the information that has been gained up to the present, not only regarding the prediction of the economic events such as the prediction of demand and the amount of sales but also other events that chronologically vary is an important issue in various fields.

Various types of chronological analysis methods have been proposed as methods for predicting subsequent changes in events that chronologically occur, such as the demand in the number of products and the number of products that have been sold. As examples of such an analytical method, multivariate analyses such as multiple regression analysis and the T method can be cited (see Patent Document 1 and Non-Patent Document 1). Moreover, various ideas of application for these analytical methods have been proposed (see Non-Patent Document 2).

Citation List

Patent Literature

Patent Document 1: Japanese Patent No. 3141164

Non-Patent Literature

Non-Patent Document 1: Nyumon MT System, 1st edition, Kazuo Tatebayashi, Shoichi Tejima, and Yoshiko Hasegawa, JUSE Press, Ltd., 04 December 2008.
Non-Patent Document 2: Study of T-Method to mitigate Non-Linear Phenomena, Yukiya Masuda, 17th Conference of Quality Engineering Studies, Article Collection pp. 422-425, 2009.

### Summary of Invention

Technical Problem

In the case of an analysis using the T method from among various types of chronological methods, how an item used for analysis is selected has been a problem. As for the selection of an item, a technique disclosed in Non-Patent Document 1 and referred to as a two-sided T method has been proposed. However, the present inventor found that the precision of the prediction when an item is selected using the two-sided T method was insufficient and examined a method for selecting an item wherein the estimated comprehensive SN ratio becomes the maximum in Non-Patent Document 2. As a result, the present inventor learned that the object period during which an item is to be selected should be selected taking the trend of the chronological change of past events into consideration.

The present invention is provided on the basis of what has been thus learned, and an object thereof is to provide a prediction device, a prediction method, and a computer program for further increasing the precision of prediction by taking into account the trend of chronological change.

Technical Solution

The prediction device according to the present invention is provided with: a recording means for chronologically recording values relating to an event with which a plurality of factors are associated and the plurality of factors associated with the values as data for each of a plurality of items by associating the data with the values; and an operation means for operating based on a value and a piece of data for an item read out from values and data recorded in the recording means, the piece of data being corresponding to the value, wherein the operation means selects a portion of items from the plurality of items on the basis of a factorial effect value indicating the strength of a correlation between the plurality of items and changes of the value, and predicts a value relating to the event during an object period to be predicted on the basis of the data of the selected portion of items, and is characterized in that the operation means comprises: a specifying means for specifying a trend of chronological change during a recording period of data for each item recorded in the recording means; a period selection means for selecting, from the recording period, a period having a trend of chronological change in data for each item, the trend being similar to a trend of chronological change in data during a corresponding period that is a predetermined period before the object period to be predicted; an item selection means for selecting a plurality of items on the basis of a factorial effect value derived from data for the plurality of items during the period selected by the period selection means and the value a predetermined period after the period selected by the period selection means; and a prediction means for calculating a prediction value during the object period to be predicted on the basis of data for the item selected by the item selection means during the corresponding period.

The prediction device according to the present invention is characterized in that the period selection means has: a first calculation means for calculating a numerical value representing a similarity between the data for a plurality of items during the corresponding period and the data for a plurality of items during an arbitrary first period; a second calculation means for calculating a numerical value representing a trend of chronological change in the numerical value calculated by the first calculation means; an exclusion means for excluding a portion having a low similarity from the first period on the basis of the numerical value calculated by the second calculation means; a third calculation means for calculating a numerical value representing a similarity between the data for a plurality of items during the corresponding period and the data for a plurality of items during a remaining portion after the exclusion; a fourth calculation means for calculating a numerical value representing a trend in chronological change in the numerical value calculated by the third calculation means; and a selection means for selecting a second period having a high similarity on the basis of the numerical value calculated by the fourth calculation means from the first period excluding the excluded portion.

The prediction device according to the present invention is characterized in that the first and the third calculation means are configured to calculate a Mahalanobis' generalized distance, the second and the fourth calculation means are configured to calculate the trend in the Mahalanobis' generalized distance calculated by the first or the third calculation means on the basis of a trend model, the exclusion means is configured to exclude a period during which the trend calculated by the second calculation means is higher than a predetermined value, and the selection means is configured to select a period during which the trend calculated by the fourth calculation means is no greater than a predetermined value as the second period.

The prediction device according to the present invention is provided with: a recording means for chronologically recording values relating to an event with which a plurality of factors are associated and the plurality of factors associated with the values as data for each of a plurality of items by associating the data with the values; and an operation means for operating based on a value and a piece of data for an item read out from values and data recorded in the recording means, wherein the operation means selects a portion of items from the plurality of items on the basis of a factorial effect value indicating the strength of the correlation between the plurality of items and changes in the values, and predicts a value relating to the event during an object period to be predicted on the basis of the data of the selected portion of items, characterized in that the operation means has: a specifying means for specifying a trend of chronological change during the recording period of a value recorded in the recording mean; a period selection means for selecting, from the recording period, a most recent period having a trend of chronological change in the value, the trend being similar to a trend of chronological change in the value during the corresponding period that is a predetermined period before the object period to be predicted; an item selection means for selecting a plurality of items on the basis of a factorial effect value derived from data for the plurality of items during the period selected by the period selection means and the value a predetermined period after the period selected by the period selection means; and a prediction means for calculating a prediction value during the object period to be predicted on the basis of data for the item selected by the item selection means during the corresponding period.

The prediction device according to the present invention is characterized in that the period selection means has: a determination means for determining an inclination of the chronological change in the value during the corresponding period; a means for selecting, from the recording period, a first period during which the value changes at the inclination determined by the determination means; a first calculation means for calculating a numerical value representing a similarity between the data for a plurality of items during the corresponding period and the data for a plurality of items during the first period; a second calculation means for calculating a numerical value representing a trend of change in the numerical value calculated by the first calculation means; and selection means for selecting a most recent second period having a high similarity in the first period on the basis of the comparison between the numerical value calculated by the second calculation means and a threshold value.

The prediction device according to the present invention is characterized in that he first calculation means is configured to calculate a Mahalanobis' generalized distance, the second calculation means is configured to calculate a trend in the Mahalanobis' generalized distance calculated by the first calculation means on the basis of a trend model, and the selection means is configured to select a period during which the trend calculated by the second calculation means is no greater than a predetermined value as a second period.

The prediction device according to the present invention is characterized in that the selection means is configured to select a second period having a different length, the prediction device further comprises a decision means for deciding the length that maximizes a value for a precision in predicting a value of data for each item after a predetermined period of time in the second period; and the period selection means is configured to select a second period having the same length as the length decided by the decision means.

The prediction method according to the present invention executed in a device having: a recording means for chronologically recording values relating to an event with which a plurality of factors are associated and the plurality of factors associated with the values as data for each of a plurality of items by associating the data with the values; and an operation means for operating based on a value and a piece of data for an item read out from values and data recorded in the recording means, the piece of data being corresponding to the value, wherein the operation means selects a portion of items from the plurality of items on the basis of a factorial effect value indicating the strength of a correlation between the plurality of items and changes in the values, and predicts a value relating to the event during an object period to be predicted on the basis of the data of the selected portion of items, and is characterized by having the steps of: specifying a trend of chronological change during the recording period of data for each item recorded in the recording means; selecting, from the recording period, a period having a trend of chronological change in data for each item, the trend being similar to a trend of chronological change in data during the corresponding period that is a predetermined period before the object period to be predicted; selecting a plurality of items on the basis of a factorial effect value derived from data for the plurality of items during period selected and the value a predetermined period after the selected period; and calculating a prediction value during the object period to be predicted from the data for the item selected during the corresponding period.

The prediction method according to the present invention executed in a device having: a recording means for chronologically recording values relating to an event with which a plurality of factors are associated and the plurality of factors associated with the values as data for each of a plurality of items by associating the data with the values; and an operation means for operating based on a value and a piece of data for an item read out from values and data recorded in the recording means, the piece of data being corresponding to the value, wherein the operation means selects a portion of items from the plurality of items on the basis of a factorial effect value indicating the strength of a correlation between the plurality of items and changes in the values, and predicts a value relating to the event during an object period to be predicted on the basis of the data of the selected portion of items, and is characterized in that the operation means specifies a trend of chronological change during the recording period of a value recorded in the recording means, selects, from the recording period, a most recent period having a trend of chronological change in the value, the trend being similar to a trend of chronological change in the value during the corresponding period that is a predetermined period before the objet period to be predicted, selects a plurality of items on the basis of a factorial effect value derived from the data for the plurality of items during the selected period and the value a predetermined period after the selected period, and calculates a prediction value during the object period to be predicted from the data for the item selected during the corresponding period.

The computer program according to the present invention causes a computer, having a recording means, to read out values chronologically recorded in the recording means the values being relating to an event with which a plurality of factors are associated and data for each of a plurality of items recorded in the recording means as a plurality of factors associated with the values; to select a portion of items from the plurality of items on the basis of a factorial effect value indicating the strength of a correlation between the plurality of items and changes of the value; and to predict a value relating to the event during an object period to be predicted on the basis of the data of the selected portion of items, and is characterized by causing the computer to execute the functions of: a specifying means for specifying a trend of chronological change during the recording period of data for each item recorded in the recording means; a period selection means for selecting, from the recording period, a period having a trend of chronological change in data for each item, the trend being similar to a trend of chronological change in data during a corresponding period that is a predetermined period before the object period to be predicted; an item selection means for selecting a plurality of items on the basis of a factorial effect value derived from data for the plurality of items during the period selected by the period selection means and the value a predetermined period after the period selected by the period selection means; and a prediction means for calculating a prediction value during the object period to be predicted on the basis of data for the item selected by the item selection means during the corresponding period.

The computer program according to the present invention allows a computer having a recording means, to read out values chronologically recorded in the recording means the values being relating to an event with which a plurality of factors are associated and data for each of a plurality of items recorded in the recording means as a plurality of factors associated with the values, to select a portion of items from the plurality of items on the basis of a factorial effect value indicating the strength of a correlation between the plurality of items and changes of the value, and to predict a value relating to the event during an object period to be predicted on the basis of the data of the selected portion of items, and is characterized by allowing the computer to execute the functions of: a specifying means for specifying a trend of chronological change during the recording period of a value recorded in the recording means; a period selection means for selecting, from the recording period, a most recent period having a trend of chronological change in the value, the trend being similar to a trend of chronological change in the value during the corresponding period that is a predetermined period before the object period to be predicted; an item selection means for selecting a plurality of items on the basis of a factorial effect value derived from data for the plurality of items during the period selected by the period selection means and the value a predetermined period after the period selected by the period selection means; and a prediction means for calculating a prediction value during the object period to be predicted on the basis of data for the item selected by the item selection means during the corresponding period.

According to the present invention, a value and data for each item are read out from a recording means in which values on the events that are chronological data and data for a plurality of items that are a plurality of factors regarding the values such that the trend of chronological change of chronological data for each of the items can be specified. The period is selected during which the characteristics of the fluctuation of data for each item in terms of time can be determined as in the same group as the fluctuation of the data for each item during the corresponding period, the relational equation is specified between the data for the plurality of items during the selected period and the value after a predetermined period, a plurality of items having strong correlation with the change in the value are selected, and the value during the period to be predicted is predicted on the basis of the data for the selected items from the data for each item during the corresponding period.

In the case where the data for each item during the corresponding period in the period to be predicted shows a sign of the predicted value, a relational equation can be specified on the basis of the period during which the characteristics of the fluctuation in the data for each item in terms of time can be determined as in the same group as the fluctuation of the data for each item during the corresponding period, and thus, the precision of prediction can be increased.

According to the present invention, a portion of a period for the data for each item of which the trend of the chronological change is not similar to that of the data for each item during the corresponding period is excluded from the first period, and furthermore, a portion where the data for each item is similar is selected from remained portions after the exclusion. In order to select a more similar period, the period that does not relate in terms of the trend of change is excluded, and thus, it is possible to increase the precision.

According to the present invention, the Mahalanobis' generalized distance of the data for each item is used to determine whether or not the data for each item are in the same group, and furthermore, the trend of chronological change is specified on the basis of a trend model so as to determine the similarity. As a result, it is possible to select a period that is objectively similar in accordance with a relatively easy technique, and thus, it is possible to increase the precision of prediction.

Advantageous Effects

According to the present invention, in selecting items to be used for analysis, items are selected in the signal period during which the trend of change in the data for the item at the point in time of prediction is determined to be similar, a relational equation between the selected items and the signal value after a predetermined period of time is specified, and prediction is carried out by using the specified relational equation. That is to say, prediction is carried out on the basis of the data in the period having the same group of data for each item the past event. As a result, the precision of prediction can be increased by eliminating influence of the chronological data in which a different sign from the sign of the event at the point in time of prediction appears.

Brief Description of Drawings

Fig 1 is a table illustrating examples of data contents including signal values and items used in the T method;
Fig 2 is a table illustrating examples of a proportionality constant $\beta$ and an SN ratio $\eta$ (duplicate ratio) of each item used in the T method;
Fig 3 is a table showing an actual signal value or a standardized real signal value of each member as well as a comprehensive estimated value found for each member in a list form;
Fig 4 is a graph of factor effects showing the SN ratio of the comprehensive estimated value for each item in the T method;
Fig 5 is a graph showing the effects on factor effects for each item in the T method;
Fig 6 is a schematic diagram illustrating a time difference model;

Fig 7 is a graph showing the relationship between the signal value and the data value for each item before and after a conversion process;

Fig 8 is a graph schematically showing the process for determining the optimal number of items to be selected;

Fig 9 is a graph showing the correspondence between the number of items to be selected and the SN ratio of the comprehensive estimated value;

Fig 10 is a block diagram showing the structure of the prediction device according to the present embodiment;

Fig 11 is a flow chart showing an example of the procedure for the predictive process in the prediction device according to the present embodiment;

Fig 12 is a flow chart showing an example of the procedure for the signal period selection process;

Fig 13 is a flow chart showing another example of the signal period selecting process procedure in the prediction device according to the present embodiment;

Fig 14 is a diagram illustrating the contents of items in the present example;

Fig 15 is a graph showing a contents example of the signal values used in the present example;

Fig 16 is a graph showing the trend of the signal value found by the control section in the prediction device;

Fig 17 is a graph showing the portion selected by the control section in the prediction device as well as the MD during the selected portion;

Fig 18 is a graph showing the MD and the MD trend during the period selected by the control section in the prediction device in accordance with Method 1;

Fig 19 is a graph showing an example of the prediction results on the basis of the period selected, in accordance with Method 1, by the control section in the prediction device according to the present example;

Fig 20 is a graph showing the MD and the MD trend during the period selected by the control section in the prediction device in accordance with Method 2;

Fig 21 is a graph showing an example of the prediction results on the basis of the period selected, in accordance with Method 2, by the control section in the prediction device according to the present example;

Fig 22 is a graph showing the comparison in the SN ratio of the comprehensive estimated value between different methods for selecting the signal period;

Fig 23 is a flowchart showing another example of the signal period selecting process procedure in the prediction device according to the second embodiment;

Fig 24 is a diagram illustrating the contents of items in the present example;

Fig 25 is a graph showing a contents example of the signal values used in the present example;

Fig 26 is a graph showing the trend of the signal value found by the control section in the prediction device;

Fig 27 is a graph showing the portion selected by the control section in the prediction device and the MD during the corresponding period;

Fig 28 is a graph showing the prediction results by the control section in the prediction device according to the present example;

Fig 29 is a graph showing the prediction value in the case where the signal period is the most recent two years;

Fig 30 is a graph showing the prediction value in the case where the signal period is the most recent one year; and

Fig 31 is a graph showing the comparison in the SN ratio of the comprehensive estimated value between different methods for selecting the signal period.

Description of Embodiments

In the following, the embodiments of the present invention are specifically described in reference to the drawings.

In the predictive method disclosed below, the invention of the "time difference model" is added to the conventional MT system that has been used, in particular to the basic method using the T method in order to predict the chronological change in the signal (value concerning an event) and, thus, the precision of the prediction is improved. Furthermore, a "method for selecting an appropriate signal and item" used for prediction is added from a past signal and the item corresponding to the past signal (factor) such that the precision of the prediction is improved. Here, the following predictive method is implemented by means of an operation means such as a computer (below-described prediction device 1) wherein each piece of data can be read out from a recording means in which data to be used for prediction is recorded.

In the following, a "method for selecting a signal and an item" is particularly disclosed. Here, the technologies that are already disclosed in the above, such as the T method and the time difference model, are technologies and inventions on which the selection method is assumed and, thus, are necessary to make the understanding of the method for selecting a signal and an item according to the present invention easier and, therefore, are described in the following.

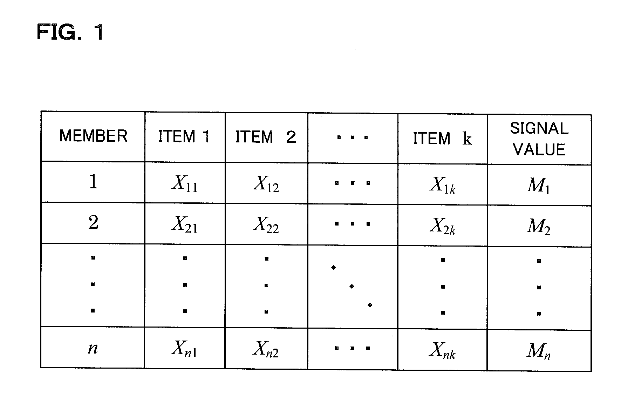

First, the T method is outlined. Fig 1 is a table showing examples of data contents of a signal value and an item used in the T method. In Fig 1, members are indices showing data for each unit period and are denoted as 1, 2, ... , n. The data values themselves are recorded as signal values M. "item 1," "item 2"..."item k" are items that become factors associated with the signal values M. $X_{11}, X_{12}, ... , X_{1k}$ are denoted as the data of each item associated with the signal

value $M_1$ of member 1. In the case wherein a member is an amount of electricity usage for each month, for example, the amount of electricity usage (W) for each month is the signal value M and the items are variables that are likely associated with the fluctuation in the amount of electricity usage, such as "month", "air temperature", "wind velocity", "precipitation amount (monthly average)", "hours of sunlight (monthly average)", "highest air temperature (monthly average)", and "lowest air temperature (monthly average)". In this case, the data of items is the data of the value for each item, for example which month it is, the monthly average value of the air temperature, the monthly average value of the wind velocity, and the like.

Though actual values may be used for the signal value M and the data X of each item, it is preferable to use the actual values after they have been standardized using an operation means. An example of the method for standardization is a method according to which an operation means subtracts the average value of the data of each item (average value of the air temperature that is the monthly average of all of the members to be used) from the data X of each item (average monthly air temperature, for example). As a result, it becomes possible to express the predictive expression as a straight line that passes through the original point in the case wherein data values of the items are plotted in correspondence with the signal values (referred to as unit space).

In accordance with the predictive method, a specific equation for specifying the relationship between the signal value M of each member and the data of articles that are associated multivariables is found by means of an operation means, data of an item that is an object to be predicted in the next unit period is predicted and the data of the predicted item is applied to the specific expression for a prediction. However, the data of items is multivariate. There is a case wherein there are 12 members and the number of items is 20 (k = 20), for example. In this case, it is difficult to find a specific equation to predict the next signal value. According to the T method, a value indicating the intensity of the factor effect for the fluctuation of the signal value is evaluated for each of a great number of items and a weight is placed on the value indicating the factor effect. As a result, effective items can be selected in order to make a prediction with a sufficiently high precision only by using the selected items without using data of all of the items.

Therefore, in accordance with the T method, the operation means calculates the proportionality constant $\beta$ and the SN ratio $\eta$ (duplicate ratio) for each item by applying Formulas 1 and 2 in the following using the members having the signal value M. The SN ratio is a value denoted by using an inverse number of the dispersion shown in Formula 2 in the following and is the sensitivity to signal value for each item, which shows the strength of the correlation between each item and the signal value.

[Mathematical Expression 1]

a proportionality constant

$$\beta_1 = \frac{M_1 X_{11} + M_2 X_{21} + \cdots + M_n X_{n1}}{r} \qquad \cdots \text{Formula 1}$$

an SN ratio $\quad \eta_1 = \begin{cases} \dfrac{\dfrac{1}{r}\left(S_{\beta 1} - V_{e1}\right)}{V_{e1}} & \left(\text{If } S_{\beta 1} > V_{e1}\right) \\ 0 & \left(\text{If } S_{\beta 1} \leq V_{e1}\right) \end{cases} \qquad \cdots \text{Formula 2}$

where

effective number of replications $\qquad r = M_1^2 + M_2^2 + \cdots + M_n^2$

total variation $\qquad S_{T1} = X_{11}^2 + X_{21}^2 + \cdots + X_{n1}^2$

variation of the proportional $\quad S_{\beta 1} = \dfrac{\left(M_1 X_{11} + M_2 X_{21} + \cdots + M_n X_{n1}\right)^2}{r}$

error variation $\qquad S_{e1} = S_{T1} - S_{\beta 1}$

error variance $\qquad V_{e1} = \dfrac{S_{e1}}{n-1}$

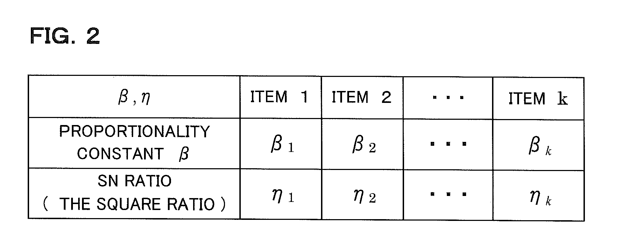

Here, the above formulas 1 and 2 are equations for calculating the proportionality constant $\beta$ and the SN ratio $\eta$ (duplicate ratio) for item 1. The operation means carries out the same calculation on items 2 through k as on item 1. Fig 2 is a table illustrating an example of the proportionality constant $\beta$ and the SN ratio $\eta$ (duplicate ratio) for each item used in the T method. In Fig 2 the proportionality constant $\beta$ and the SN ratio $\eta$ (duplicate ratio) for each item that has been calculated by applying the above describe formulas 1 and 2 to each item are shown in a table form.

Next, the proportionality constant $\beta$ and the SN ratio $\eta$ (duplicate ratio) for each item are used in order for the operation means to calculate an estimated value of the output for each item of each member. The estimated value of the output for item 1 can be shown in Formula 3 in the following for the ith member. Likewise, the operation means calculates the estimated values of the output for items 2 through k.

[Mathematical Expression 2]

$$\hat{M}_{i1} = \frac{X_{i1}}{\beta_1} \qquad \cdots \quad \text{Formula 3}$$

As a result, the operation means can derive a comprehensive estimation equation (Formula 4) as a predictive formula showing the relationship between the data on an item and the comprehensive estimated value of a signal value. Here, the comprehensive estimation equation using all of the items (1 through k) does not necessarily have the highest precision of prediction for the signal values of the object to be predicted. Therefore, the operation means selects an appropriate combination of items from among all of the items in order to increase the contribution to the effects on the object to be predicted and to increase the precision of the prediction.

Thus, the operation means calculates the comprehensive estimated value using the SN ratios $\eta_1, \eta_2, \dots , \eta_k$ (duplicate ratio) that indicate the precision of the estimations concerning the estimated value for each item as weighted coefficients. Accordingly, the comprehensive estimated value of the ith member can be represented in Formula 4 in the following.

[Mathematical Expression 3]
a comprehensive estimated value

$$\hat{M}_i = \frac{\eta_1 \times \dfrac{X_{i1}}{\beta_1} + \eta_2 \times \dfrac{X_{i2}}{\beta_2} + \cdots + \eta_k \times \dfrac{X_{ik}}{\beta_k}}{\eta_1 + \eta_2 + \cdots + \eta_k} (i = 1,2,\cdots,n) \quad \cdots \text{Formula 4}$$

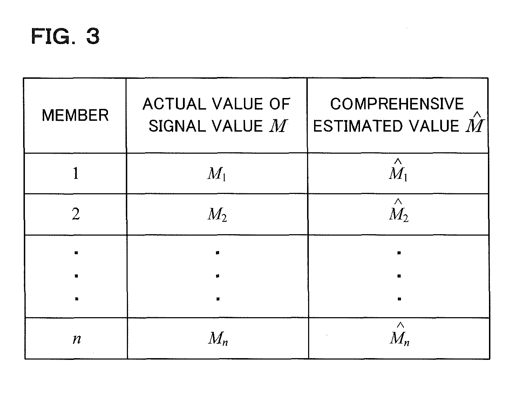

Fig 3 is a table showing an actual signal value or a standardized real signal value of each member as well as a comprehensive estimated value found for each member in a list form. Thus, the actual value of each member and the comprehensive estimated value that have been gained as in Fig 3 are used for the operation means to calculate the SN ratio $\eta$ (db) for each item using Formula 5 in the following.

[Mathematical Expression 4]
the SN ratio of the comprehensive estimated value

$$\eta = 10 \log \left( \frac{\dfrac{1}{r}\left(S_\beta - V_e\right)}{V_e} \right) (db) \qquad \cdots \quad \text{Formula 5}$$

where

linear function
$$L = M_1 \hat{M}_1 + M_2 \hat{M}_2 + \cdots + M_n \hat{M}_n$$

effective number of replications
$$r = M_1{}^2 + M_2{}^2 + \cdots + M_n{}^2$$

total variation
$$S_T = \hat{M}_1{}^2 + \hat{M}_2{}^2 + \cdots + \hat{M}_n{}^2 \quad (f = n)$$

variation of the proportional
$$S_\beta = \frac{L^2}{r} \quad (f = 1)$$

error variation
$$S_e = S_T - S_\beta \quad (f = n - 1)$$

error variance
$$V_e = \frac{S_e}{n - 1}$$

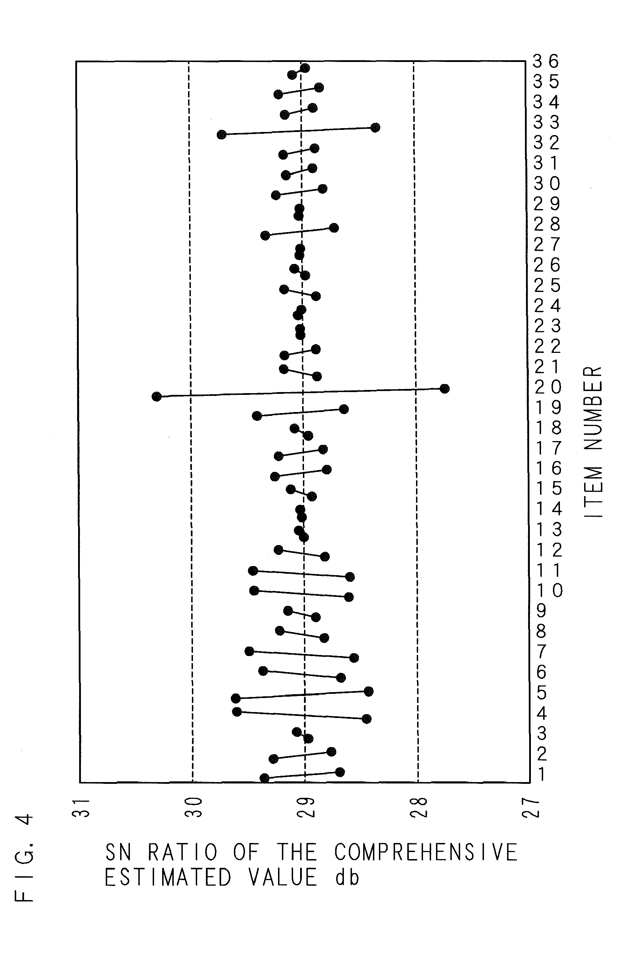

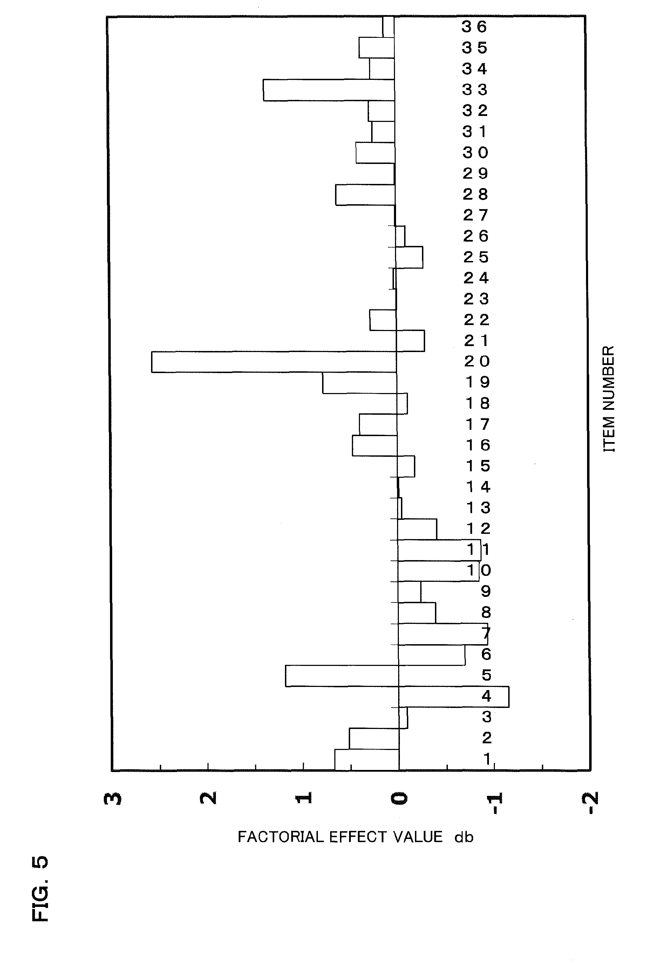

In accordance with the T method, the comprehensive estimated value for each item that has been found as described above is used to further calculate a value that is referred to as a factorial effect value and, thus, an item is selected on the basis of the factorial effect value. Fig 4 is a graph of the factor effects showing the SN ratio of the comprehensive estimated value for each item in accordance with the T method. Fig 5 is a graph showing the effects on factor effects for each item in the T method.

In Fig 4 the lateral axis indicates items that become objects to be selected and the longitudinal axis indicates the SN ratio of the comprehensive estimated value and, thus, Fig 4 shows the SN ratio for each item. In Fig 4, the left side of each item shows the SN ratio of the comprehensive estimated value for each piece of data including the data on the item, that is to say, the strength of the correlation vis-à-vis the signal value, and the right side shows the SN ratio of the comprehensive estimated value for each piece of data excluding the data on the item. The example in Fig 4 has 36 items and, thus, there are $2^{36-1}$ combinations of selections. The operation means derives the SN ratio of the object to be predicted for one or a plurality of items in each of these combinations. In addition, the operation means calculates the average value of the SN ratios in a combination that includes the items to become the objects and the average value of the SN ratios in a combination that does not include these items. For each item Fig 4 shows on the left side the average value of the SN ratio that includes the data of the items that has been thus calculated and on the right side the average value of the SN ratio that does not include the items.

In Fig 5, the lateral axis indicates items to become objects to be selected and the longitudinal axis indicates the factorial effect values and, thus, Fig 5 shows the degree of the factorial effect value for each item. A factorial effect value along the longitudinal axis in Fig 5 indicates the degree of the SN ratio on the left side (including items) relative to the SN ratio on the right side (including no items) concerning the SN ratio of the comprehensive estimated value for each item wherein the strength of correlation of the objects to be predicted is denoted by db units in Fig 4, that is to say, the value gained by subtracting the SN ratio on the right side from the SN ratio on the left side. Namely, Fig 5 shows the level of the effects on the SN ratio in the case wherein each item is included relative to the case wherein the item is not included. Accordingly, it is shown that the items wherein the calculated factorial effect value is positive can be used to increase the SN ratio of the comprehensive estimated value. In the method that is referred to as the two-sided T method, only such items that the factorial effect value is positive are selected for analysis in accordance with the above-described T method.

In the case wherein prediction is carried out in accordance with the above-described T method (two-sided T method), the actual precision of prediction cannot, as before, be increased. Thus, the present inventor first applied an idea of a time difference model to the T method in order to carry out a conversion process taking the non-linearity between the signal value and the data value on the item into consideration and, furthermore, used a method for maximizing the SN ratio of the comprehensive estimated value as a method for selecting an item instead of a method for selection depending on whether the factorial effect value is positive or negative.

First, the time difference model is described.

Originally, the T method is not a method for predicting chronological data. This is method for selecting the most influential factor in terms of the value of an event to which a large number of factors relate without particularly having a concept of a time access. In the case where the T method is used as the prediction method as it is, as described above, the relationship between the data for each item and the signal value specified for each member so that the signal value of the next member is predicted. Accordingly, the data for each item of the next member should be predicted in order to predict the signal value of the next member. At this time, it can be easily assumed that estimation errors of the data for each item accumulate and deteriorate the precision of the prediction of the signal value. In the case where the next signal value is predicted on the basis of data that chronologically transit, an event that will happen in the future should have its sign in the past particularly in the field of economic prediction or sales prediction. Therefore, the inventor determined to establish the correspondence between the signal value and the data for each item not between members during the same period of time but between members that shifted by a predetermined a period of time. Typically, the operation means for implementing the prediction method according present embodiment make the data for each item during a certain period of time correspond to the signal value after predetermined period of time so as to carry out of calculations in Formulas 1 to 5 between these. The comprehensive estimation equation that has gained as a result of the above, is used to estimate (predict) the signal value after predetermined period of time on the basis of data for each item during any period of time at present (most recent).

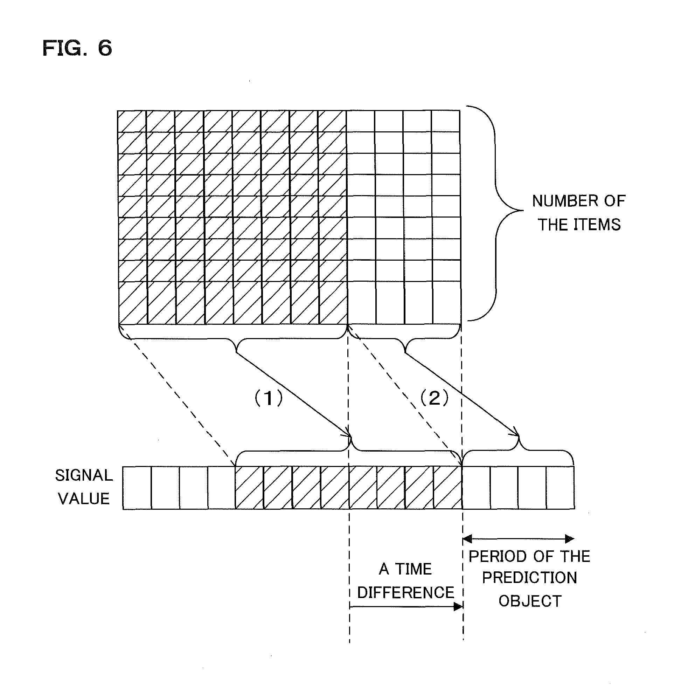

Fig 6 is a schematic diagram illustrating a time difference model. Fig 6 shows the elapse of time from left to right. Each rectangular in the lower part of Fig 6 indicates a signal for a unit period of time and each rectangular in the upper part indicates data for each item for each unit period of time during the same period of time as of the signals. For example, signals of each month, which is the unit period of time, and data for an item in each month are shown. There are a plurality of items for each signal. In the time difference model a signal is not made to correspond to the data for items during the same period of time but the signal value Mi is made to correspond to pieces of data $X_{i-t1}$, $X_{i-t2}$, ... $X_{i-tk}$ (for example, t = 4 months). According to the prediction method of the present embodiment, the operation means uses the T method by applying the signal values and the data for items for which the time difference model is used to the relationship between the $M_1$ (in Formulas 1 to 5) and the data for items $X_{11}$, $X_{12}$, ... $X_{1k}$. Thus the signal value during the object period to be predicted can be found by applying the value of the data for an item at a predetermined period of time before, that is to say the value of the data for each item in the corresponding period (for months here) close to the object period to be predicted to Formula 4. Namely, in the time difference model according to the prediction method of the present embodiment, the operation means specifies the relationship between the data for a plurality of items and the signal value after predetermined period of time, and thus makes it possible to predict the signal value in the future from the data for the past or present items.

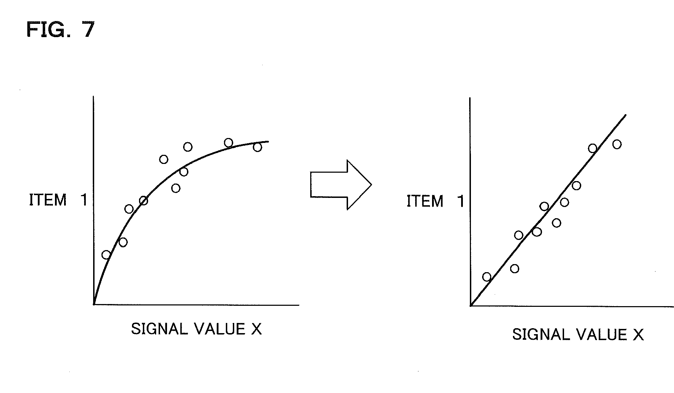

Thus, in the prediction method according to the present embodiment, a conversion process taking nonlinearity into consideration is carried out on the signal value X. Fig 7 is a graph showing the relationship between the signal values before and after the conversion process and the data value for each item. The left side in Fig 7 shows the relationship between the data for certain item and the signal value before the conversion process and the right side shows the relationship between the data for certain item and the signal value after the conversion process. In the T method, a straight line that passes through the point zero is set for the relationship between the data for each item and the signal value so that weighing on the basis of the amount of shift from this straight line (digitalization as the SN ratio) is carried out. That is to say the relationship as shown in the right side of Fig 7 is assumed. The smaller dispersion relative to the straight line items have, the more the items contribute toward the change in the signal value while the greater dispersion items have, that is to say, the less correlation exists between the change in the data value for the items and the change in the signal value, the less items contribute to the change in the signal value. However, naturally the data of all the items are not plotted on a straight line in the relationship vis-à-vis the signal value, that is to say, a linear relationship. There are some items having strong relationship represented by a quadric function that does not pass the original point as shown in the left side of Fig 7. Therefore, in the prediction method according the present embodiment, the operation means linearly converts the data $X_{ij}$ for an item (i is the number of members (1 through n), j is the number of items (1 through k)) to $x_{ij}$ showing a linear relationship and the supposition that there is a nonlinear relationship (quadric function).

Concretely, the operation means calculates an average value of the data $X_{ij}$ and the signal value Mij as unit space data that is standard between the data $X_{ij}$ (1 through n) for an item and the signal value Mij (1 through n). The operation means carries out standardization process for subtracting the average value in the unit space from the signal value Mij and from each value of the item data $X_{ij}$. In addition, the operation means approximates the signal value Mij in a polynomial expression such as quadric expression using the value of item data $X_{ij}$ that varies. Next, the operation means convert the value $X_{ij}$ (1 through n) to $x_{ij}$ using this approximated value. In the case where the relationship between the signal value and the item data is linear, the value $X_{ij}$ (1 through n) of the item data is applied to Formula 4 without any change, or the data of standardized $X_{ij}$ (1 through n) is applied to Formula 4, while in the case of nonlinearity, the value of $x_{ij}$ (1 through n) after the conversion is applied to Formula 4.

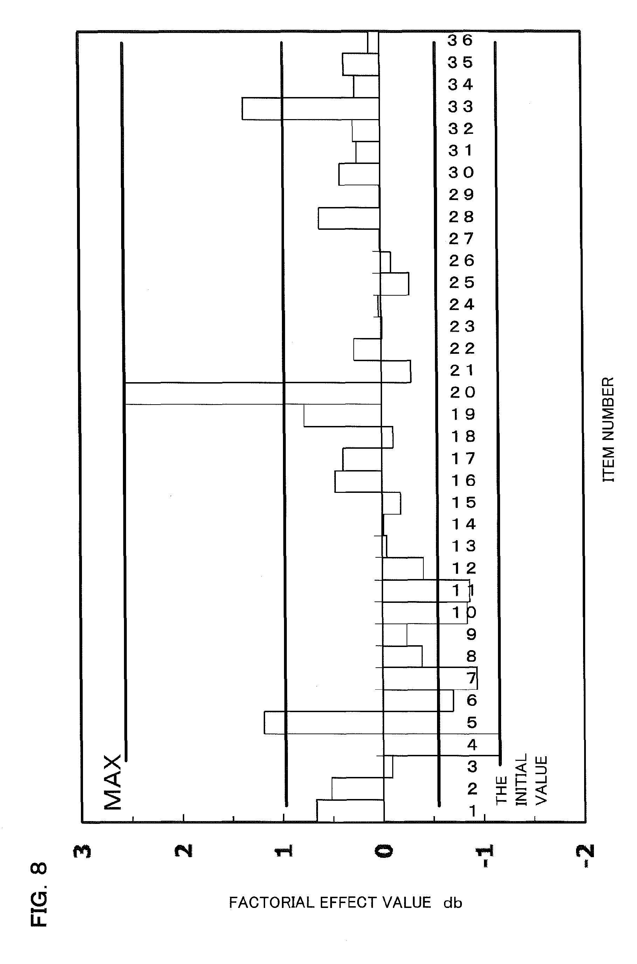

In addition, in the prediction method according to the present embodiment, the time difference model is applied to the signal value and the data for each item as method for selecting an item and furthermore, the operation means calculates the SN ratio of the comprehensive estimated value and selects the item that makes the SN ratio of the comprehensive estimated value maximum on the basis of the corresponding data for each item and the signal value after the conversion process taking the nonlinearity into consideration. Fig 8 is a graph conceptually showing the process for determining the optimal number of items to be selected. First, the SN ratio of the comprehensive estimated value for each item is calculated as in Formulas 1 to 5 for the signal value and the data for each item on which a linear conversion process has been carried out by using the time difference model. Thus, as described for Figs 4 and 5, the operation means calculates the factorial effect value for each item from the SN ratio of the comprehensive estimated value. As shown in Fig 8, the operation means first sets the minimal value of the factorial effect value for each item as the initial threshold value. The operation means select an item of which the factorial effect value is the threshold value or greater and calculates the SN ratio of the comprehensive estimated value for the signal value (for example, each of 1 through n). In the case the threshold value is the initial value, all of the items are selected. Next, the operation means set the value gained by adding a predetermined value to the threshold value as the next threshold value and selects an item of which the factorial effect value is the threshold value or greater in the same manner so as to calculate the SN ratio of the comprehensive estimated value for the signal value. When the operation means repeats this process until the threshold value reaches the maximum value of the factorial effect value or greater, that is to say reaches the lateral line indicated as MAX in Fig 8, it is possible to calculate the SN ratio of the comprehensive estimated value for the data for a plurality of selected items for each the numbers of items. Here, the operation means may set the initial value of the threshold value to the maximum value MAX or greater, and thus, may calculate the SN ratio of the comprehensive estimated value by selecting items of which factorial effect value are each threshold value or greater when the threshold value is made smaller by a predetermined value repeatedly.

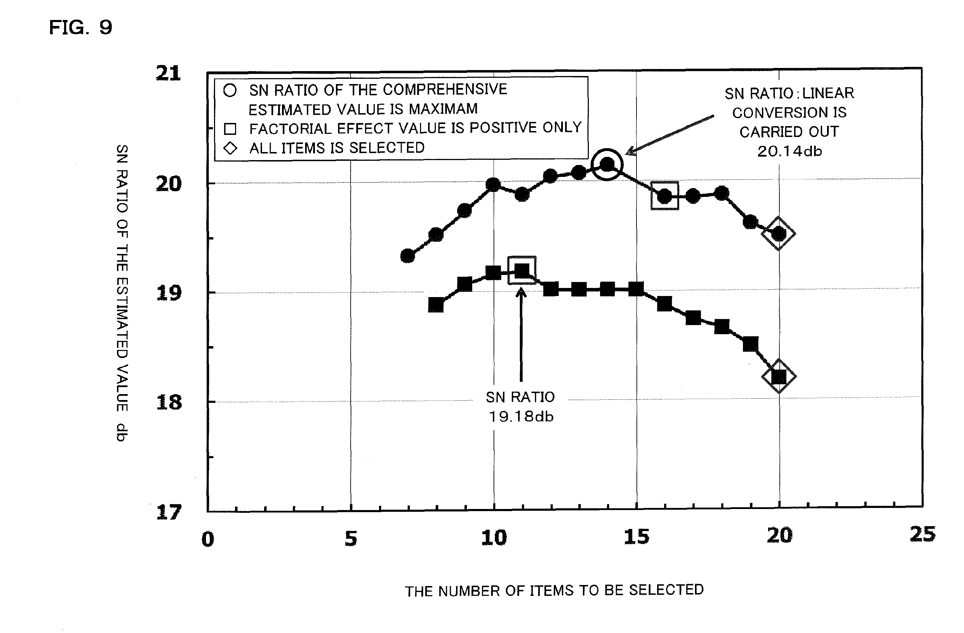

Fig 9 is a graph showing the correspondence between the number of items to be selected and SN ratio of comprehensive estimated value. The SN ratio of the comprehensive estimated value is shown for the number of items in the case where items are selected in accordance with the method shown in Fig 8. In Fig 9, the transitions indicated by solid circles are the SN ratios of the comprehensive estimated values in the case where linear conversion is carried out while the transitions indicated by solid squares are the SN ratios of the comprehensive estimated values in the case where no linear conversion is carried out. As shown in Fig 9, the SN ratios of the comprehensive estimated values are higher as a whole, that is to say the precision of the prediction is higher, in the case where linear conversion is carried out. In addition, open squares from among the values of SN ratios indicate the SN ratios of the comprehensive estimated values in the case where items are selected using the two-sided T method according to which items of which the factorial effect value is positive, are selected. The open diamonds indicate the SN ratios of the comprehensive estimated values in the case where all the items are selected. The white circle indicates the number of items where the comprehensive SN ratio becomes maximum. As shown in Fig 9, the method for selecting items of which factorial effect value is positive does not make the SN ratio of the comprehensive estimated value maximum in the case where nonlinear conversion is carried out. As shown in Fig 9, the optimal item that makes the SN ratio of the comprehensive estimated value highest can naturally be selected when the operation means implements the method shown in Fig 8.

As described above, the present inventor acquired such knowledge that the time difference model can be applied to the T method so as to calculate the SN ratio of the comprehensive estimated value after a conversion process has been carried out taking the nonlinearity between the signal value and pieces of data for items into consideration, and thus, the method for selecting the item that makes the SN ratio maximum can be applied to increase the precision of prediction. In addition to the method for the time difference model, in selecting items that maximizes the SN ratio of the comprehensive estimated value, the present inventor acquired such knowledge that the signal period that is appropriate for prediction can be selected from the signal periods recorded (members 1 through n), and thus, the precision of prediction can be increased. The operation means selects the signal period that is appropriate for the prediction on the bass of the signal trend and the trend of similarity among the items. In the following, a method for selecting the signal period that can increase the precision of the prediction is concretely disclosed.

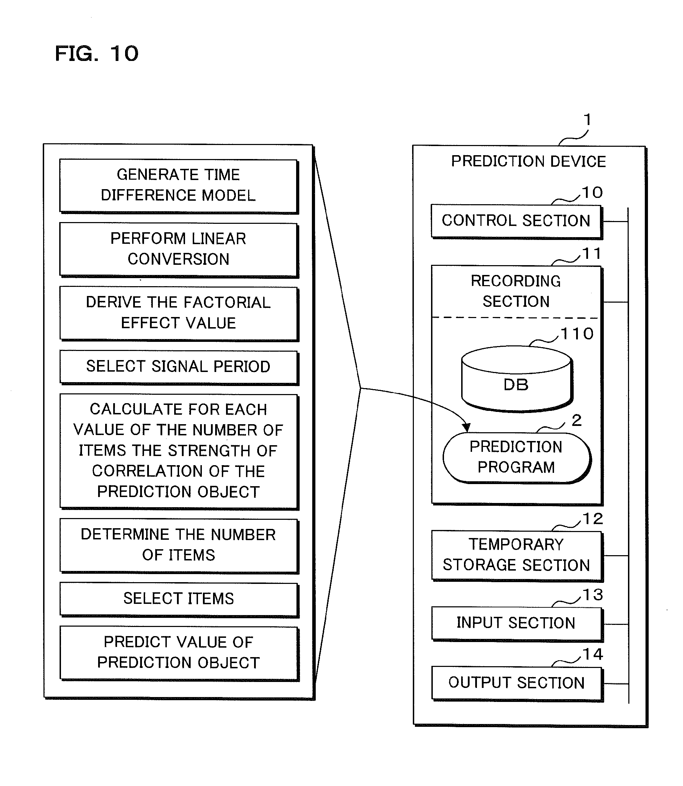

First, the structure of the prediction device for implementing the entire prediction method including the method is described. Fig 10 is a block diagram showing the structure of a prediction device 1 according to the present embodiment. The prediction device 1 is made of a computer such as a personal computer or a server computer. The prediction device 1 is provided with a control section 10, a recording section 11, a temporary storage section 12, an input section 13 and an output section 14.

The control section 10 is made of a CPU (central processing unit). The control section 10 controls the personal computer or the server computer on the basis of the below-described prediction program 2 so as to allow the prediction device 1 through function according to present embodiment. Here the control section 10 functions as the operation means for implementing the prediction method.

The recording section 11 is made of a nonvolatile memory such as a ROM (read only memory) or a hard disk drive. Here, the recording section 11 may be made of an external hard disc drive, an optical disc drive or other types of recording apparatus connected through a communication network. That is to say the recording section 11 may be made of one or a plurality of any types of information recording media that are accessible from the control section 10.

The recording section 11 stores A prediction program 2 that includes various types of procedures for implementing the prediction method according to the present embodiment. In addition, a portion of the recoding region in the recording section 11 is used as a database (DB) 110 for recording signal values and also recording the data for a plurality of items that correspond to the signal values. The control section 10 can read and write signal values and the data for a plurality of items from and into the database 110. The database 110 records the signal value for each member and the data for each item chronologically in the format as shown in Fig 3, for example.

The temporary storage section 12 is made of a nonvolatile memory such as a DRAM (dynamic random access memory) or an SRAM (static random access memory). The temporary storage section 12 temporarily stores information generated through the process carried out by control section 10.

The input section 13 accepts an input through the operation by the user using a keyboard, a mouse and the like.

The output section 14 outputs the results of information processing by the control section 10 on a display unit such as a liquid crystal monitor or by means of a printing unit such as a printer.

In the thus formed prediction device 1, the control section 10 carries out the process on the basis of the prediction program 2 so that a signal value for a future event can be predicted.

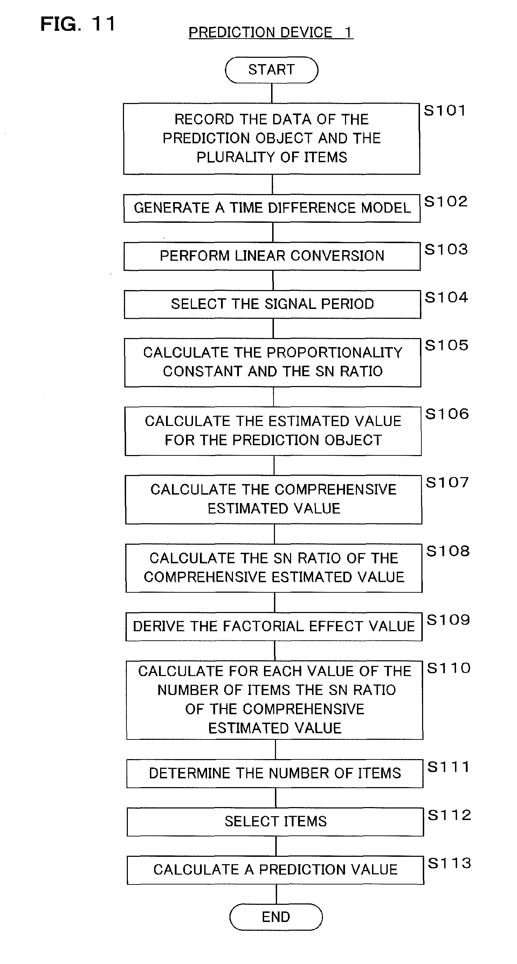

Fig 11 is a flow chart showing an example of the prediction process procedure in the prediction device 1 according to the present embodiment.

The control section 10 accepts an input of a signal value and the data for a plurality of items that relate to the signal value from the input section 13 and records the accepted signal value and the data for each item in the database 110 in the recording section 11 (Step S101). Here the signal value and the data for each item recorded in the database 110 may be input from input section 13, may be input from another apparatus through a communication network or may be input from another information recording medium.

The control section 10 generates a time difference model on the basis of the signal value and the data for each item that have been recorded in the database 110 in the recording section 11 (Step S102). As described in reference to Fig 6, the time difference model generated in Step S102 makes correspondence between the data for each item and the signal value at point of time after a predetermined period from the point of time corresponding to the data for each item. That is to say, in Step S102, the control section 10 makes correspondences between the signal values and the data for each item that have been chronologically stored with shifts by a predetermined period of time.

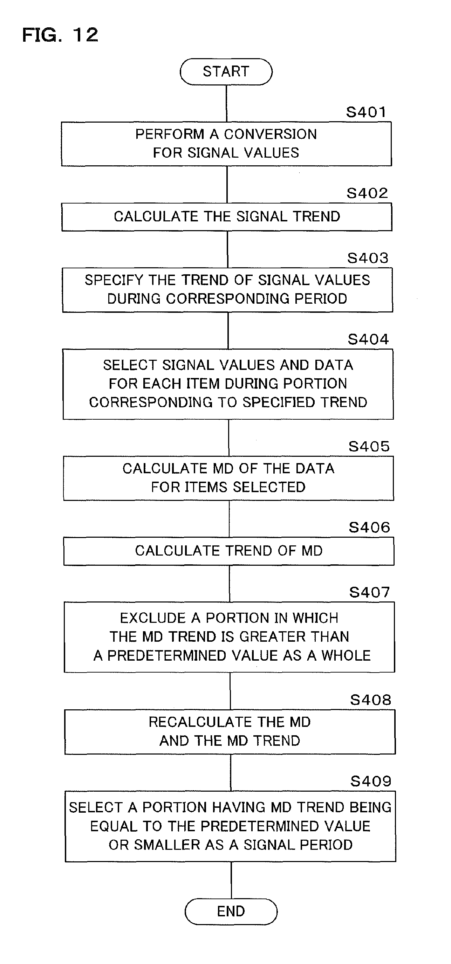

The control section 10 linearly converts the data for each item on the basis of the relationship between a signal value and data for each item that correspond to each other in the generated time difference model (Step S103). The control section 10 uses the data after linear conversion to carry out a process for selecting the signal period to be used for the prediction (Step S104). The process for selecting a signal period is described in details in reference to the below-described flow chart in Fig 12.

The control section 10 calculates the proportionality constant β and the SN ratio η (duplicate ratio) for each item as Formulas 1 and 2 in the above on the basis of the signal value in the signal period selected in Step S104 and the corresponding item data in the time difference model (Step S105).

The control section 10 calculates the estimated value of the output as in Formula 3 for each member in the selected signal period using the proportionality constant β and the SN ratio η (duplicate ratio) for each item (Step S106).

The control section 10 calculates the comprehensive estimated value using the SN ratio (duplicate ratio), which is the precision of estimation for the estimated value, as the weighing coefficient as in Formula 4 (Step S107).

Next, the control section 10 calculates the SN ratio (db) of the comprehensive estimated value for each item on the basis of the signal value and the comprehensive estimated value as in Formula 5 (Step S108).

Te control section 10 derives the factorial effect value for each item (Step S109). As described above, the factorial effect value is calculated for each subject item by finding the difference between the SN ratio of the comprehensive estimated value for the data for each item excluding the subject item and the SN ratio of the comprehensive estimated value for the data for each item including the subject item. The SN ratio of the comprehensive estimated value is the strength of the correlation between the signal value and the data for the subject item and is a value represented as the logarithm of the value that is proportional to the inverse number of the dispersion.

Next, the control section 10 calculates the SN ratio of the comprehensive estimated value for the data for a plurality of items that have been selected in order of their factorial effect value for each the number of item (Step S110). The details of the process in Step S110 are the same as described above in reference to Fig 8.

The control section 10 determines the number of items that makes the SN ratio maximum on the basis of the SN ratio of the comprehensive estimated value for each the number of items (Step S111).

The control section 10 selects the items of which the number has been determined in Step S111 (Step S112). Then the control section 10 applies the data for the items selected from the data for each item a predetermined period of time before the corresponding period of time to be predicted in the time difference model, that is to say, from the data for each item during the corresponding period of time close to the period of time to be predicted, to Formula 4 so as to calculate the prediction value (Step S113). β and η in Formula 4 are calculated in Step S104 (calculated using data after selecting the time difference model, the linear conversion and the signal period). In Step S113, the prediction value is output from the output section 14 or recorded in the recording section 11. In the case where the signal value is standardized the prediction value can be found through inverse transformation.

Fig 12 is a flow chart showing an example of the signal period selecting process procedure in the prediction device 1 according to the present embodiment. The process procedure shown below corresponds to the details of the process for selecting the signal period in Step S104 in Fig 11.

The control section 10 standardizes the signal value (subtracts the average value) in order to reduce the fluctuation ratio and performs the conversion to calculate a logarithm value (Step S401).

The control section 10 calculates the trend of the signal value after the conversion for all members or during a predetermined period of time (for example, for 10 years) (Step S402). In order to calculate the signal trend it is possible to use any of the various types of publicly known methods of trend calculation on chronological data, for example the application of a trend component model using a state space model.

The control section 10 specifies, among the trend calculated in step S402, the trend for signal values (predicted value) in a period being the same as the period corresponding to data for items before the time difference model is applied (corresponding period), the data for items being associated with the signal values in the object period to be predicted (Step S403). In Step S403, in particular, the control section 10 judges whether the trend during the corresponding period has a positive inclination or a negative inclination.

The control section 10 selects signal values and data for each item (after the time difference model is applied) in a portion of the corresponding period having the same trend properties as the trend specified in Step S403 (a positive inclination or a negative inclination) (Step S404).

The control section 10 calculates the Mahalanobis' generalized distance (hereinafter referred to as MD) of the data for items (after linear conversion) during a selected portion (Step S405).

The control section 10 calculates the trend of the MD in the selected portion (Step S406).

The control section 10 excludes a portion in which the MD trend is greater than a predetermined value (for example 1.0) as a whole from the plurality of discontinuous portions (portions having the same signal trend) that form the selected portions (Step S407).

The control section 10 recalculates the MD and the MD trend of data for items in the portion after the exclusion in Step 407 (Step S408).

The control section 10 selects a portion in which the MD trend gained in Step S408 has a predetermined value (for example 1.0) or smaller as a signal period to which the T method is to be applied from within the portions after the exclusion (Step S409) and completes the process.

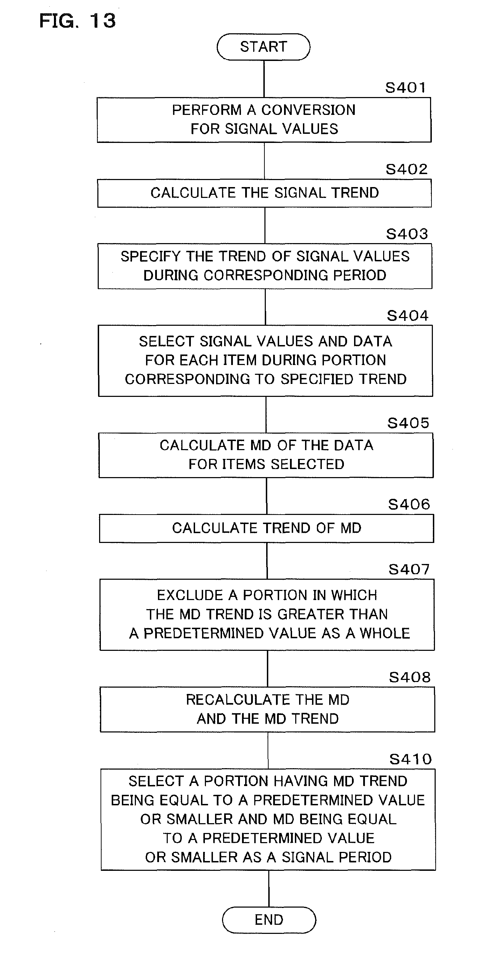

In addition, the control section 10 in the prediction device 1 may further narrow the signal period using the value of the MD. Fig 13 is a flowchart showing another example of the signal period selecting process procedure in the prediction device 1 according to the present embodiment. Here, the same symbols are attached to the same steps within the process procedure shown in the flowchart in Fig 13 as those in the process procedure shown in Fig 12, and therefore, the details thereof are not described.

The control section 10 selects only a portion (month) in which the MD value is equal to or smaller than a predetermined value (1.0 for example) as the signal period to which the T method is to be applied from within the portions where the MD trend gained in Step S408 has a predetermined value (1.0 for example) or smaller (Step S410), and completes the process.

Selecting a signal period as shown in the flowchart in Fig 12 or 13 by the control section 10, prediction is carried out based on the relationship between item data having chronological fluctuation properties that are similar to the data for item corresponding to the signal value during the period to be predicted (object to be predicted) and the signal value after a predetermined period. As a result, unlike in the prior art, the effects from the relationship between the item data and the signal value during the period showing a sign that is not similar to the point a predetermined period before the period to be predicted (present time) can be reduced so that it can be expected for the precision of prediction to increase.

Here, in the process procedure shown in the flowchart in Fig 12 or 13, the trend of the signal value is calculated and the signal period is selected depending on whether the inclination of the signal trend is positive or negative in the configuration. However, the control section 10 in the prediction device 1 may calculate he MD and the MD trend on the signal value after the conversion for standardization to which a time difference model is applied and on the data for each item after the linear conversion so as to carry out a process for selecting the signal period on the basis of the MD and the MD trend (S405 to S409 or S405 to S410) without calculating the trend of the signal value so as to select the signal period using the calculated trend (S402 to S404). In the case where the data for each item during the period corresponding to the period to be predicted show a sign of the value to be predicted, it should increase the precision of prediction to specify the relational equation on the basis of the fluctuation properties of data for each item in terms of time that can be determined to be in the same group as the data for each item during the corresponding period.

Next, specific examples to which the prediction method using the prediction device 1 is applied are described.

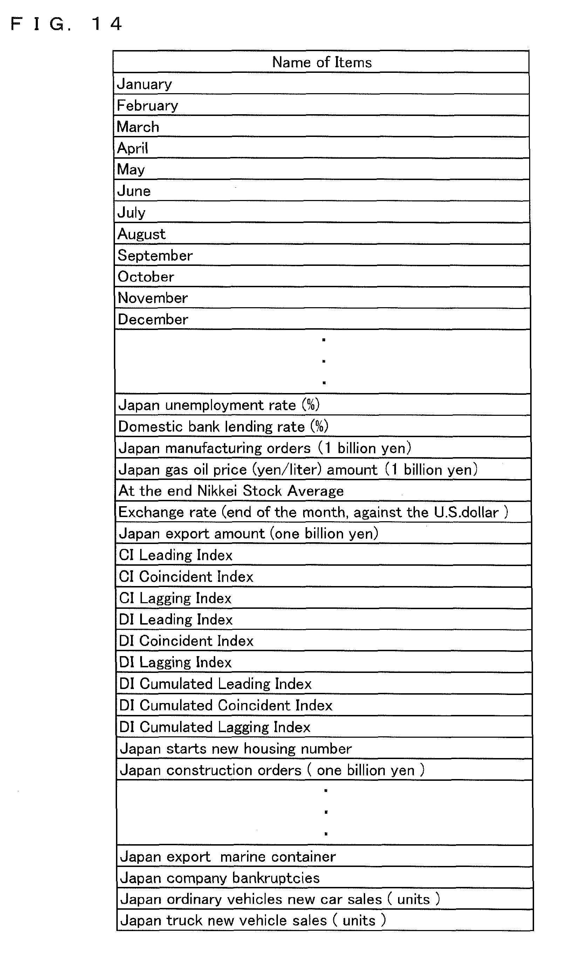

An example where the prediction method according to the present embodiment is applied to a prediction of demand of construction machines is described below. Fig 14 is a diagram illustrating the contents of items in the present example. In the present example, the prediction object (signal value) is the "number of shipped construction machines" and the items relating to the prediction object are various economic indices. As shown in Fig 14, "month", "unemployment rate (%) in Japan", "domestic bank lending rate (%)", and the like, are set as items of economic indices. For each of these items, data for each month are made to correspond to the members. Here, the items indicating the months such as "January", "February", and the like, are items that indicate the month to which each item corresponding to a member corresponds, and "1" is recorded for the member is the number of the shipments in the corresponding month as a signal value, and "0" is recorded for the other months. For example, as for the member in January, 2010, the data for the item "January" is "1" and the data for the items of other months "February" to "December" is "0". In the present example, the prediction device 1 predicts the "number of shipped construction machines" on the basis of 36 items in total, including 24 items related to economic indices (some of the items are not shown or the details thereof are different in Fig 13), and 12 items relating to the month.

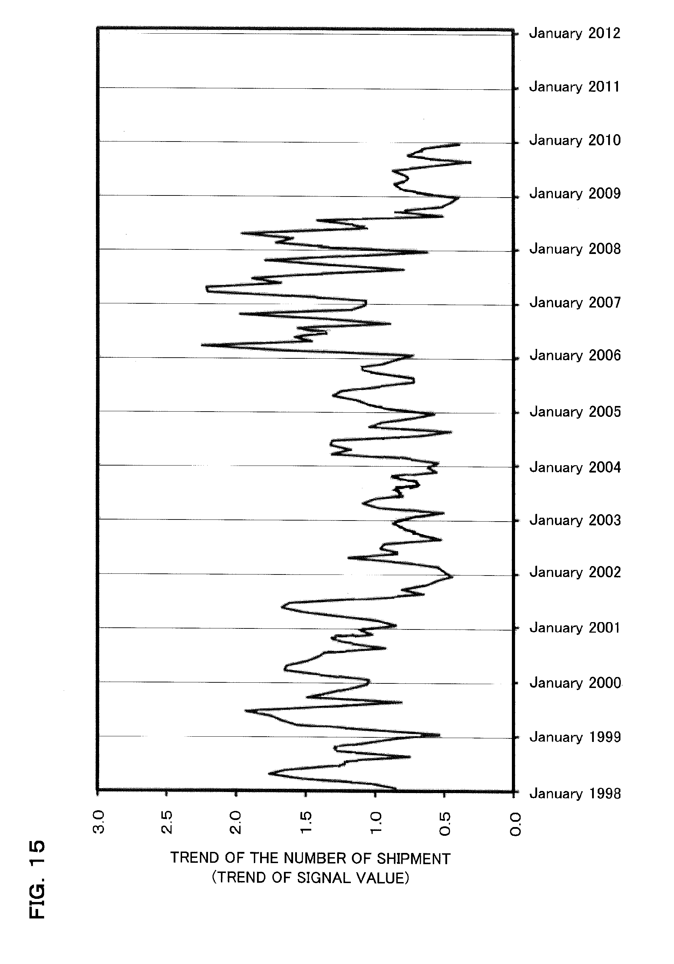

Fig 15 is a graph showing a contents example of the signal values used in the present example. The lateral axis in Fig 15 chronologically shows the year and the month, and the longitudinal shows the number of shipments of construction machines. Here, the number of shipments shown in Fig 15 is the average number per month during the year 2005, which has been standardized. In the present example, the number of shipment during the 12 months from January to December of 2010 was predicted using the prediction device 1 on the basis of the data for each item in Fig 14 relative to the chronological data on the number of shipments in Fig 15. As described below, the prediction values gained by the prediction device 1 for the period selected in accordance with the two methods (Figs 12 and 13) were, respectively, evaluated on the basis of the actual values on the number of shipments during the 12 months from January to December of 2010.

First, the control section 10 in the prediction device 1 generates chronological data to which a time difference model is applied for the chronological signal values as shown in Fig 15 and the data for each item corresponding to each signal value (S102). In this example, the period to be predicted is 12 months and, therefore, a time difference model shifting 12 months is applied.

Thus, the control section 10 carries out linear conversion on the data for items to which a time difference model has been applied (S103) and carries out a conversion process for standardization and for taking a logarithmic value as described above on the signal value (S401). In addition, the control section 10 calculates the trend of the signal value after conversion (S402).

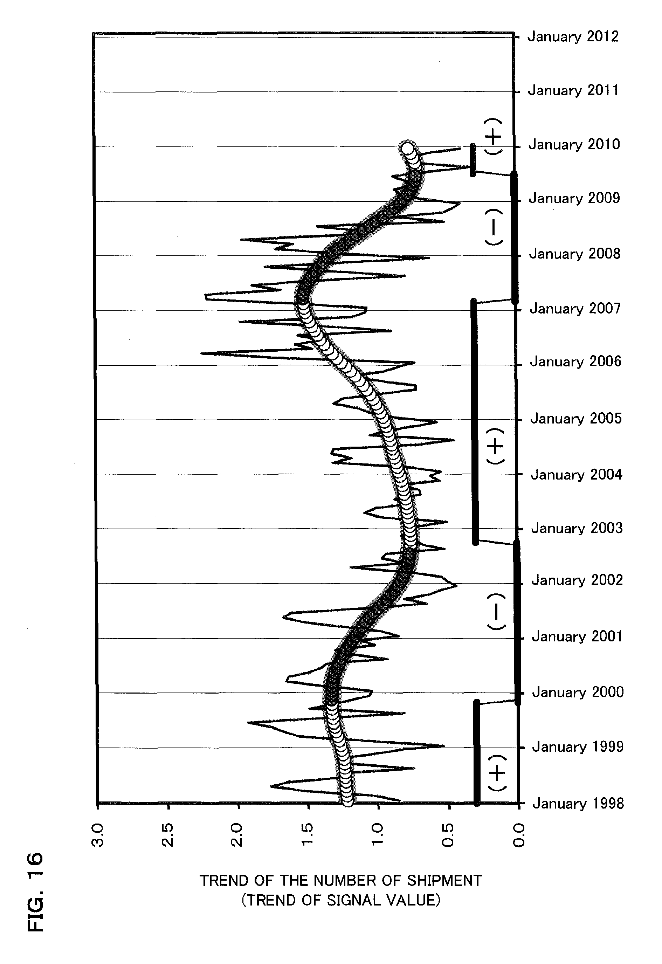

Fig 16 is a graph showing the trend of the signal value found by the control section 10 in the prediction device 1. Fig 16 shows a graph that is overlapped with the graph of the number of shipments in Fig 15. Fig 16 shows the signal trend with solid circles and open circles. Open circles show portions within the recorded period where the inclination of the signal trend is positive (+), while solid circles show portions where the inclination of the signal trend is negative (-). The lateral axis in Fig 16 indicates portions where the inclination is positive and negative.

The control section 10 judges the inclination of the signal trend for the data for items corresponding to the period to be predicted, that is to say, the most recent data (July to December 2009) from January to December of 2009 a predetermined period (12 months) before the 12 months from January to December of 2010, on the basis of the signal trend shown in Fig 16 (S403). The control section 10 judges that the inclination is positive as a result of the process in S403.

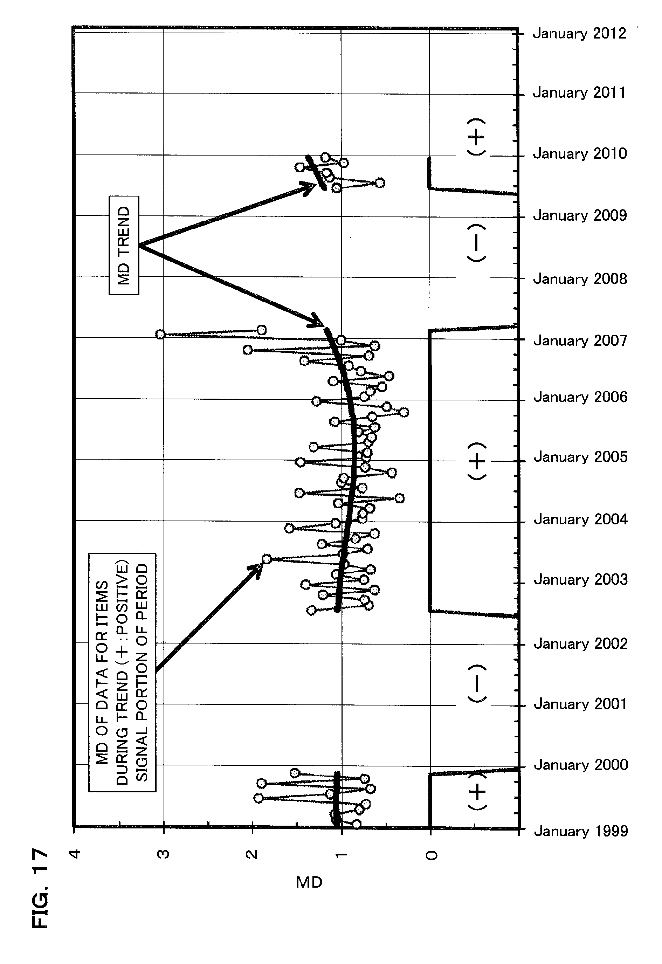

The control section 10 selects a portion where the inclination of the signal trend is positive from the entire period or from a predetermined period (for example 10 years) (S404). Fig 17 is a graph showing the portion selected by the control section 10 in the prediction device as well as the MD during the selected portion. The lateral axis of Fig 17 indicates the year and the month to which the signal value and the data for each item correspond, and the longitudinal axis indicates the MD value. Here, the range along the lateral axis is partially different from that in Fig 16. The control section 10 calculates the MD of the data for item in the selected portion having positive signal trend (S405). Fig 17 shows the calculated MD with a circle. In addition, the control section 10 calculates the trend of the MD (S406). Fig 17 shows the calculated MD trend with a thick line.

The control section 10 excludes a portion in which the MD trend is greater than a predetermined value (1.0) as a whole from the selected portion (S407).

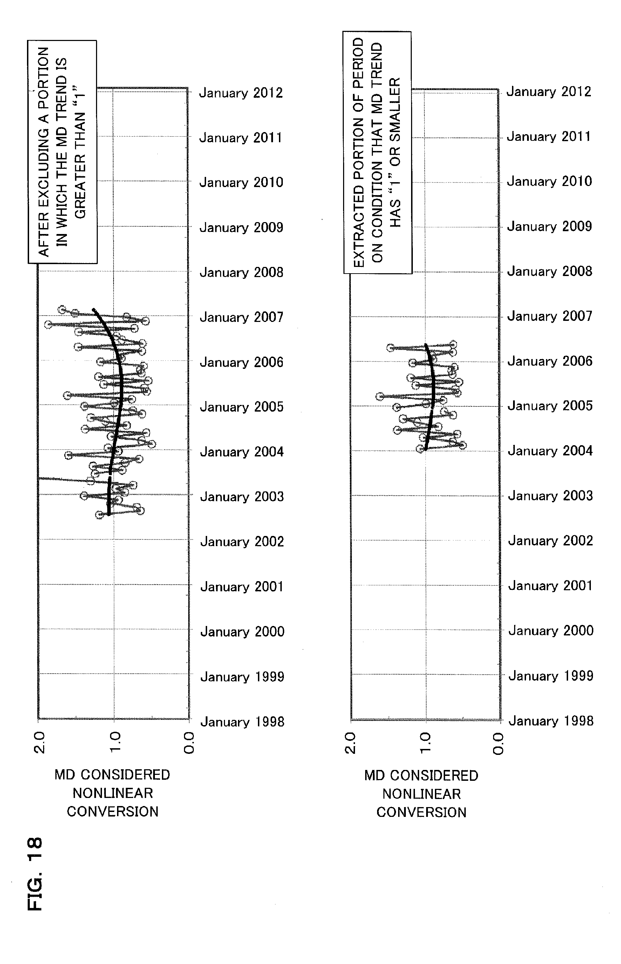

Furthermore, the control section 10 recalculates the MD and the MD trend in the portions after the exclusion in accordance with a first method (Fig 12) (S408), and selects the portions where the MD trend has a predetermined value (1.0) or smaller after the recalculation as a signal period (Method 1). Fig 18 is a graph showing the MD and the MD trend during the period selected by the control section 10 in the prediction device 1 in accordance with Method 1. Here, the upper part of Fig 18 shows the MD and the MD trend in the portions after the portion where the MD trend is greater than a predetermined value (1.0) has been excluded, and the lower part shows the MD and the MD trend in the portion where the MD trend has a predetermined value (1.0) or smaller after the recalculation. The lateral axis in Fig 18 indicates the year and the month to which the signal value and the data for each item correspond, and the longitudinal axis indicates the MD value. The MD values are denoted by open circles and the MD trend is shown by a solid line. As shown in Fig 18, the control section 10 selects the period from January 2004 through May 2006 in accordance with Method 1.

The control section 10 calculates the SN ratio of the comprehensive estimated value for each item in accordance with the two-sided T method on the basis of the signal value and the data for each item (after the time difference model has been applied) during the selected period (January 2004 through May 2006), and carries out a process for selecting the number of items that maximizes the SN ratio (S105 to S111). After that, the control section 10 selects items of which the number is the selected number (S112), and calculates the prediction value on the basis of the data for the items selected during the corresponding period (January to December, 2009) (S113).

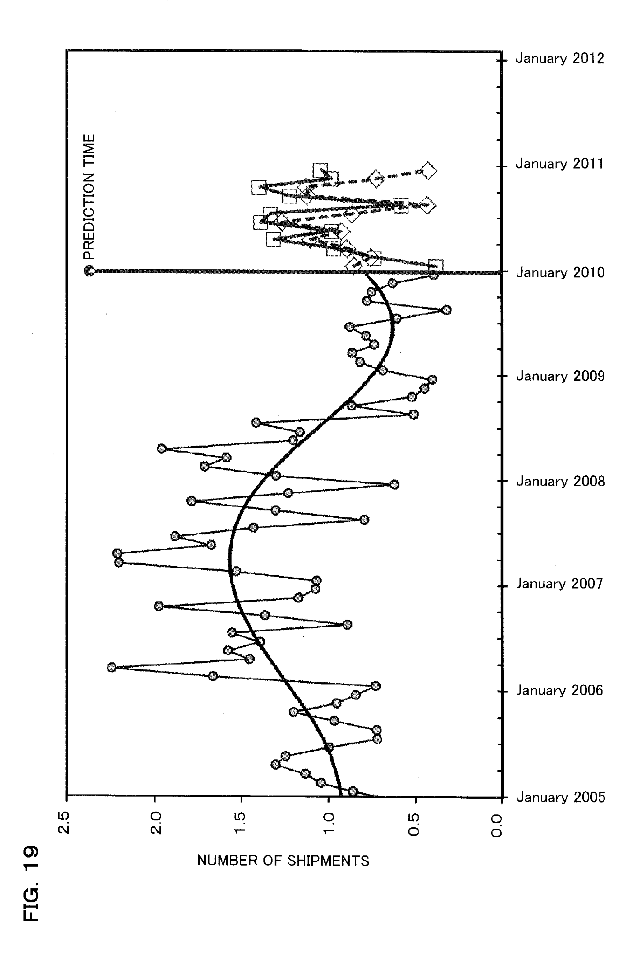

Fig 19 is a graph showing an example of the prediction results on the basis of the period selected, in accordance with Method 1, by the control section 10 in the prediction device 1 according to the present example. The graph shown in Fig 19 is the prediction results by the control section 10 on the basis of the signal value and the data for each item during the period selected in the process procedure shown in the flowchart in Fig 12. The lateral axis in Fig 18 indicates the year and the month to which the signal value and the data for each item correspond, and the longitudinal axis indicates the number of the shipments. The values denoted by solid circles from January 2005 to January 2010 are actual values (after standardization), which are the same as those shown in Fig 15. The solid line in a waveform in Fig 19 shows the signal trend. The respective values denoted by open diamonds and connected by a dotted line in Fig 19 are the values predicted by the control section 10 on the basis of the data in the selected period. In contrast, the respective values denoted by open squares and connected by a solid line are actual values (after standardization) from January 2010 to December 2010. As shown in Fig 19, though the respective prediction values are different from the actual values on the monthly basis, it can be seen from the prediction values for 12 months that the prediction was achieved with sufficient precision.

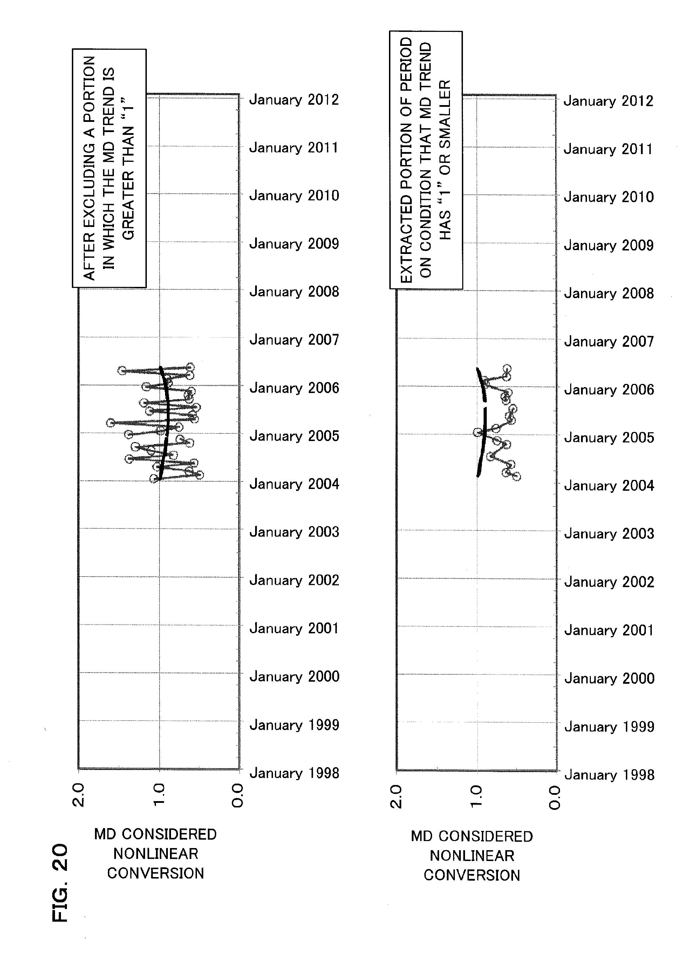

The procedure in accordance with the second method (Fig 13) using the control section 10 is described in detail below. The control section 10 calculates the MD and the MD trend in the portions after the portion where the MD trend is greater than the predetermined value as a whole has been excluded (S408), and selects only the portion (month) where the MD trend after the recalculation has a predetermined value (1.0) or smaller and the MD value is no greater than the predetermined value (1.0) (S410). Fig 20 is a graph showing the MD and the MD trend during the period selected by the control section 10 in the prediction device 1 in accordance with Method 2. The upper part of Fig 20 shows the MD and the MD trend in the portions where the MD trend has a predetermined value (1.0) or smaller after the recalculation, and the lower part shows the MD and the MD trend in the portions where the MD value is no greater than the predetermined value (1.0). The lateral axis in Fig 20 indicates the year and the month to which the signal value and the data for each item correspond, and the longitudinal axis indicates the MD value. The MD values are denoted by open circles and the MD trend is shown by a solid line.

The control section 10 calculates the SN ratio of the comprehensive estimated value for each item in accordance with the two-sided T method on the basis of the signal values and the data for each item in the period selected in accordance with Method 2 (after the time difference model has been applied), and carries out a process for selecting the plurality of items that maximizes the SN ratio (S105 to S111). In addition, the control section 10 selects items of which the number is the selected number (S112), and calculates the prediction value on the basis of the data for the items selected in the corresponding period (January to December 2009) (S113).

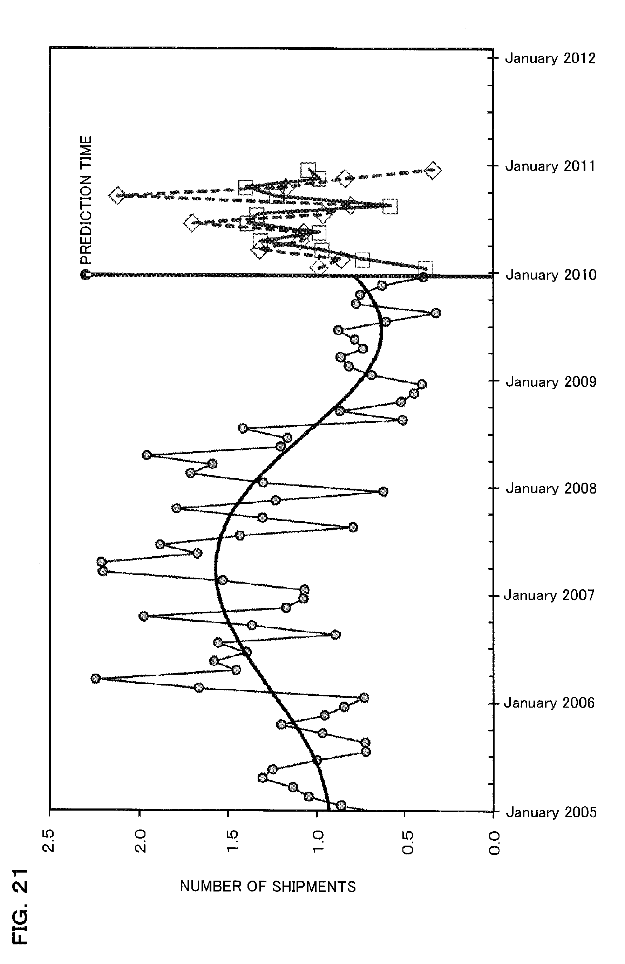

Fig 21 is a graph showing an example of the prediction results on the basis of the period selected, in accordance with Method 1, by the control section 10 in the prediction device 1 according to the present example. The graph shown in Fig 21 is the prediction results by the control section 10 on the basis of the signal value and the data for each item during the period selected in the process procedure shown in the flowchart in Fig 12. The lateral axis in Fig 21 indicates the year and the month to which the signal value and the data for each item correspond, and the longitudinal axis indicates the number of the shipments. The values denoted by solid circles from January 2005 to January 2010 are actual values (after standardization), which are the same as those shown in Fig 15. The solid line in a waveform in Fig 21 shows the signal trend. The respective values denoted by open diamonds and connected by a dotted line in Fig 21 are the values predicted by the control section 10 on the basis of the data in the selected signal period. In contrast, the respective values denoted by open squares and connected by a solid line are actual values (after standardization) from January 2010 to December 2010. As shown in Fig 21, though the respective prediction values are different from the actual values on the monthly basis, it can be seen from the prediction values for 12 months that the prediction was achieved with sufficient precision.

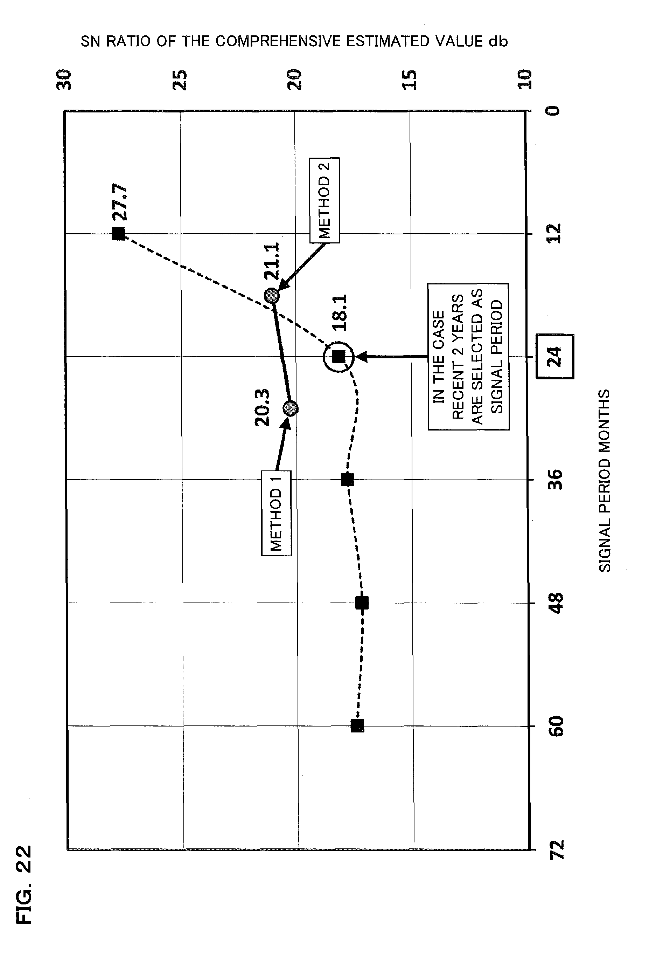

Fig 22 is a graph showing the comparison in the SN ratio of the comprehensive estimated value between different methods for selecting the signal period. The lateral axis in Fig 22 indicates the length of the selected signal period and the longitudinal axis indicates the SN ratio of the comprehensive estimated value. In Fig 22, solid circles denote the SN ratios of the comprehensive estimated values in the case where the prediction device 1 in the present example selects a signal period, and solid squares denote the SN ratios of the comprehensive estimated values in the case where the most recent period is used. As shown in Fig 22, there is a small amount of change in the SN ratio of the comprehensive estimated value in the case where the signal period is selected for prediction in accordance with Method 1 and Method 2.

Thus, it is possible to allow the prediction device 1 to predict the number of shipments with a high precision in accordance with a method for selecting a similar period using the MD and the MD trend.

Second embodiment

In the second embodiment, the period having the properties, of which the appearance is close to that of the properties of the trend of the signal value during the same period as of the data for the items that correspond to the signal value in the period to be predicted, is specified so that prediction is carried out from the relationship between the item data in the specified period and the signal value after a predetermined period in the configuration, which is described below.

Here, the structure of the prediction device according to the second embodiment is the same as that of the prediction device 1 in the first embodiment, and therefore, the structure thereof is not described here.

The prediction device 1 in the second embodiment predicts the signal value in the period to be predicted following the respective steps shown in the flow chart in Fig 11. In the second embodiment, the process for selecting a signal period in step S104 in Fig 11 is carried out in accordance with the following procedure.

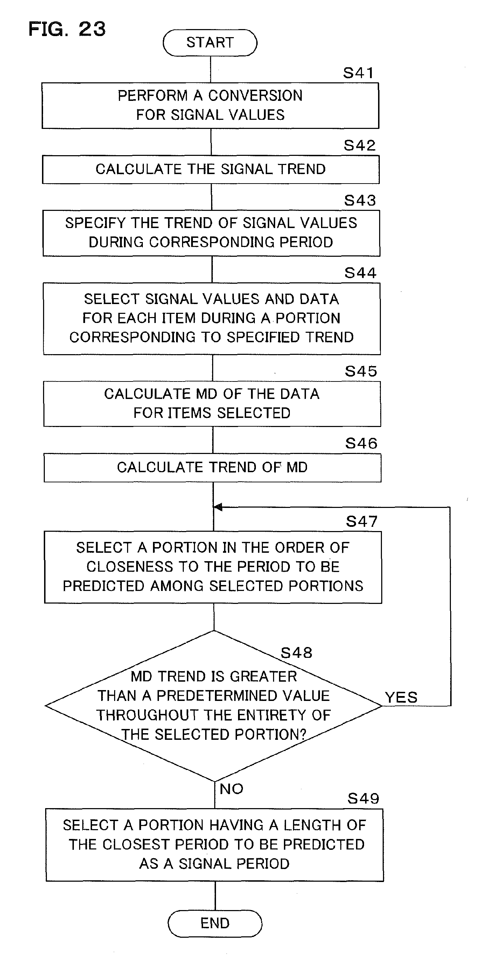

Fig 23 is a flow chart showing an example of the signal period selecting process procedure in the prediction device 1 according to the second embodiment.

The control section 10 standardizes the signal value in order to lower the fluctuation ratio (subtracts the average value) and takes a logarithmic value for conversion (Step S41). Next, the control section 10 calculates the trend of the signal value after the conversion for all members or during a predetermined period of time (for example, for 10 years) (Step S42). In order to calculate the signal trend it is possible to use any of the various types of publicly known methods of trend calculation on chronological data, for example the application of a trend component model using a state space model.

The control section 10 specifies the trend of the data for items corresponding to the signal value during the period to be predicted and the signal value during the same period (corresponding period) before the application of the time difference model from among the trends calculated in Step S42 (Step S43). In Step S43, the control section 10 specifically determines whether the trend during the corresponding period has a positive inclination or a negative inclination.

The control section 10 selects signal values in a portion within the corresponding period having the same trend properties as the trend specified in Step S43 (whether a positive inclination or a negative inclination) as well as data for each item (after application of the time difference model) (Step S44).

The control section 10 calculates the Mahalanobis' generalized distance (MD) of the data for items (after linear conversion) during a selected portion (Step S45).

The control section 10 calculates the trend of the MD during the selected portion (Step S46).

The control section 10 selects a portion in the order of their closeness to the period to be predicted from a plurality of discontinuous portions (portions having the same signal trend) that form the selected portions (Step S47). The control section 10 determines whether or not the MD trend is greater than a predetermined value (for example 1.0) throughout the entirety of the selected portion (Step S48). The control section 10 returns the process to Step S47 upon the determination that the MD trend is greater than the predetermined value in Step S48 (YES in S48), and selects the next portion that is second closest to the period to be predicted.

The control section 10 selects a period having a length of the closest period to be predicted from within the selected portion as the signal period (Step S49) upon the determination that the MD trend is not greater than the predetermined value throughout the entirety of the selected portion, that is to say a portion of the MD trend includes a portion having the predetermined value or smaller (NO in S48), and completes the process.

When the control section 10 selects the signal period as shown in the flow chart in Fig 23, prediction can be carried out from the relationship between the item data in the period having the properties of which the appearance is close to that of the properties of the trend of the signal value during the same period as the data for the items corresponding to the signal value in the period to be predicted (object to be predicted) and the signal value after a predetermined period. As a result, the effects from the relationship between the item data and the signal value during the period showing a sign that is not similar to the point a predetermined period before the period to be predicted (present time) can be reduced so that it can be expected for the precision of prediction to increase.

Next, a concrete example to which the prediction method using the prediction device 1 is applied is described.

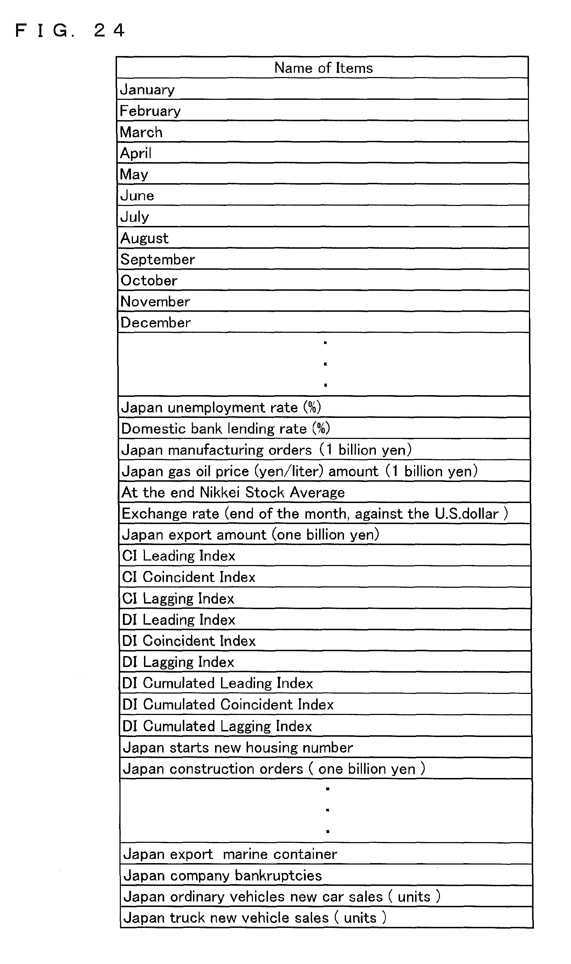

An example where the prediction method according to the present embodiment is applied to a prediction of demand of construction machines is described below. Fig 24 is a diagram illustrating the contents of items in the present example. In the present example, the prediction object (signal value) is the "number of shipped construction machines" and the items relating to the prediction object are various economic indices. As shown in Fig 24, "month", "unemployment rate (%) in Japan", "domestic bank lending rate (%)", and the like, are set as items of economic indices. For each of these items, data for each month are made to correspond to the members. Here, the items indicating the months such as "January", "February", and the like, are items that indicate the month to which each item corresponding to a member corresponds, and "1" was recorded for the member is the number of the shipments in the corresponding month as a signal value and "0" is recorded for the other months. For example, as for the member in January, 2010, the data for the item "January" is "1" and the data for the items of other months "February" to "December" is "0". In the present example, the prediction device 1 predicts the "number of shipped construction machines" on the basis of 36 items in total, including 24 items related to economic indices (some of the items are not shown or the details thereof are different in Fig 24), and 12 items related to the month.

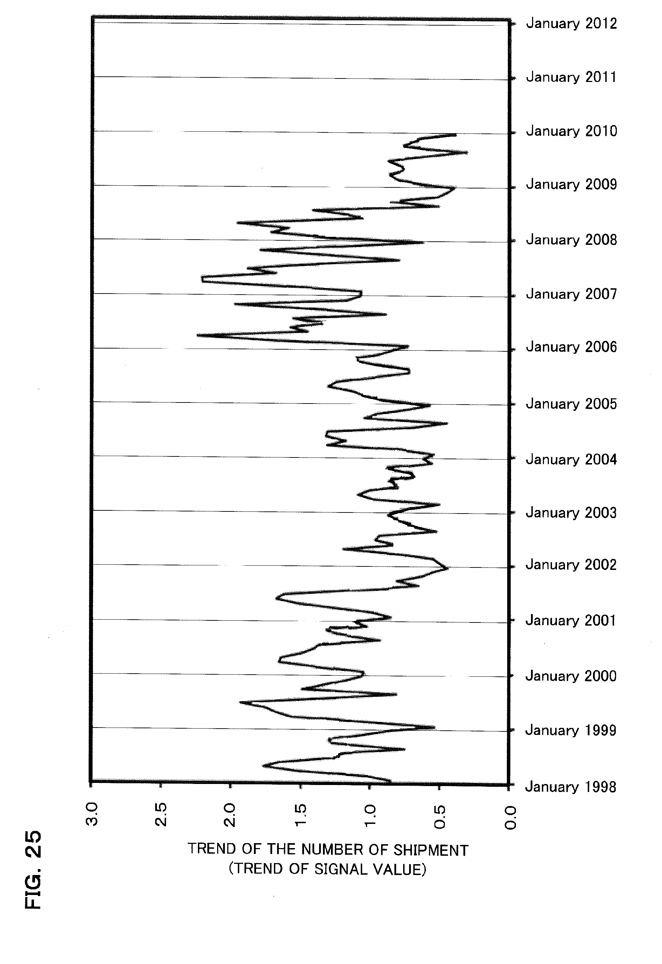

Fig 25 is a graph showing a contents example of the signal values used in the present example. The lateral axis in Fig 25 indicates the year and the month chronologically, and the longitudinal axis indicates the number of shipments. Here, the number of shipments in Fig 25 is the average number per month during the year 2005, which has been standardized. In this example, the prediction device 1 is used to predict the number of shipments during the 12 months from January through December in 2010 on the basis of the data for each item shown in Fig 24 relative to the chronological data on the number of shipments in Fig 25. As described below, the prediction values by the prediction device 1 are evaluated on the basis of the actual values of the numbers of shipments during the 12 months from January through December in 2010.

First, the control section 10 in the prediction device 1 generates chronological data to which a time difference model is applied for the signal values of the chronological data as shown in Fig 25 and the data for each item corresponding to each signal value (S102). In this example, the period to be predicted is 12 months and, therefore, a time difference model shifting 12 months is applied.

Thus, the control section 10 carries out linear conversion on the data for items to which a time difference model has been applied (S103) and carries out a conversion process for standardization and for taking a logarithmic value as described above on the signal value (S41). In addition, the control section 10 calculates the trend of the signal value after conversion (S42).

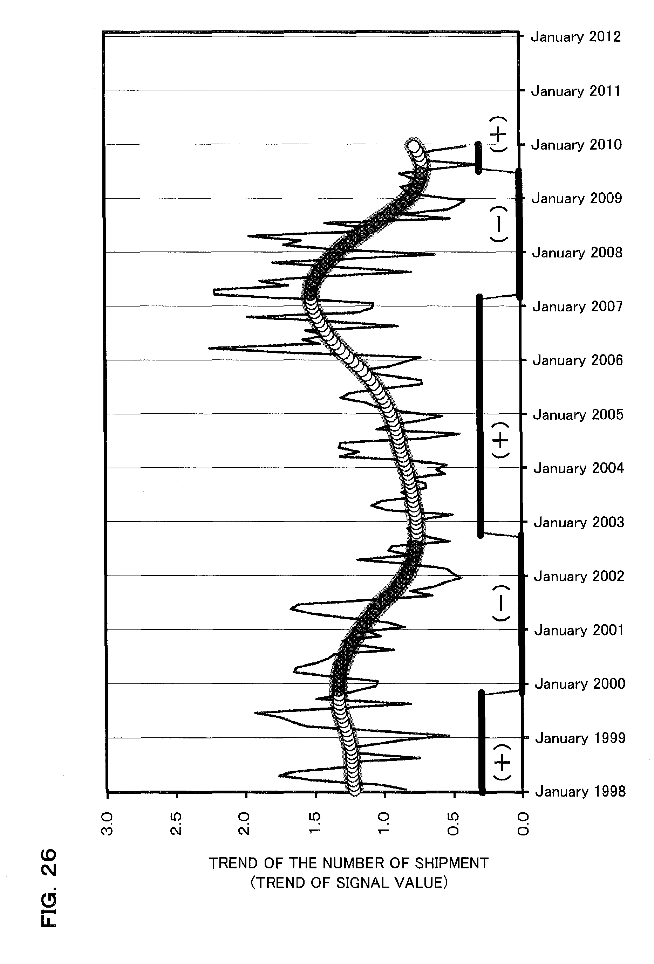

Fig 26 is a graph showing the trend of the signal value found by the control section 10 in the prediction device 1. Fig 26 shows a graph that is overlapped with the graph of the number of shipments in Fig 25. Fig 26 shows the signal trend with solid circles and open circles. Open circles show portions of the corresponding period where the inclination of the signal trend is positive (+), while solid circles show portions where the inclination of the signal trend is negative (-). The lateral axis in Fig 26 indicates portions where the inclination is positive and negative.

The control section 10 determines the inclination of the signal trend for the data for items corresponding to the period to be predicted, that is to say, the most recent data from January to December of 2009 a predetermined period (12 months) before the 12 months from January to December of 2010, on the basis of the signal trend shown in Fig 26. The control section 10 determines that the inclination is positive as a result of the process in S43.

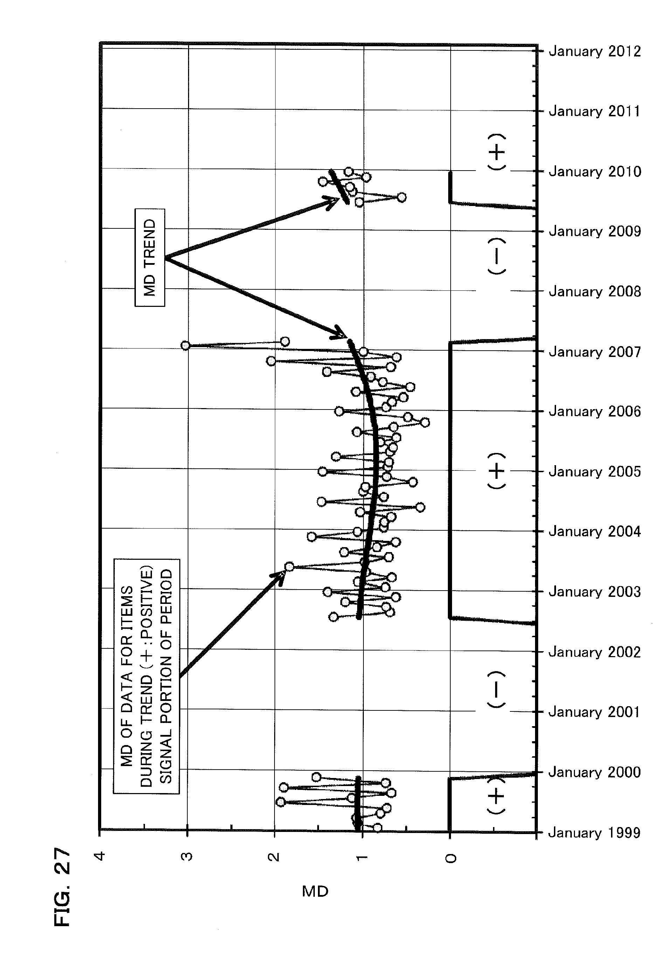

The control section 10 selects a portion where the inclination of the signal trend is positive from the entire period or from a predetermined period (for example 10 years). Fig 27 is a graph showing the portion selected by the control section 10 in the prediction device 1 as well as the MD during this period. The lateral axis of Fig 27 indicates the elapse of time, and the longitudinal axis indicates the MD value. Here, the range along the lateral axis is partially different from that in Fig 26. The control section 10 selects the item data in the portion where the specified signal trend is positive (S44) and calculates the MD (S45). Fig 27 shows the calculated MD with a circle. In addition, the control section 10 calculates the trend of the MD (S46). Fig 27 shows the calculated MD trend with a thick line.

As shown in Fig 27, the portion in which the signal trend is positive is made up of three discontinuous portions. The control section 10 first selects the most recent portion (July through December 2009) from among the three portions (S47). The control section 10 refers to the MD trend calculated for this portion and determines that the MD trend is greater than the predetermined value (1.0) (YES is S48), and thus, excludes this portion. Next, the control section 10 selects the second most recent portion (September 2002 through February 2007) from among the three portions (S47). Though the MD trend calculated for this portion is partially greater than 1.0, the majority is no greater than 1.0 (NO in S48), and therefore, the 12 months for the period to be predicted (March 2006 through February 2007) are selected as the signal period from within this portion (S49).

The control section 10 calculates the SN ratio of the comprehensive estimated value for each item in accordance with the two-sided T method on the basis of the signal value and the data for each item in the selected signal period (March 2006 through February 2007), and carries out a process for selecting a plurality of items that maximizes the SN ratio (S105 to S111). In addition, the control section 10 selects items of which the number is the selected number (S112), and calculates the prediction value on the basis of the data for the items selected during the corresponding period (January through December 2009) (S113).

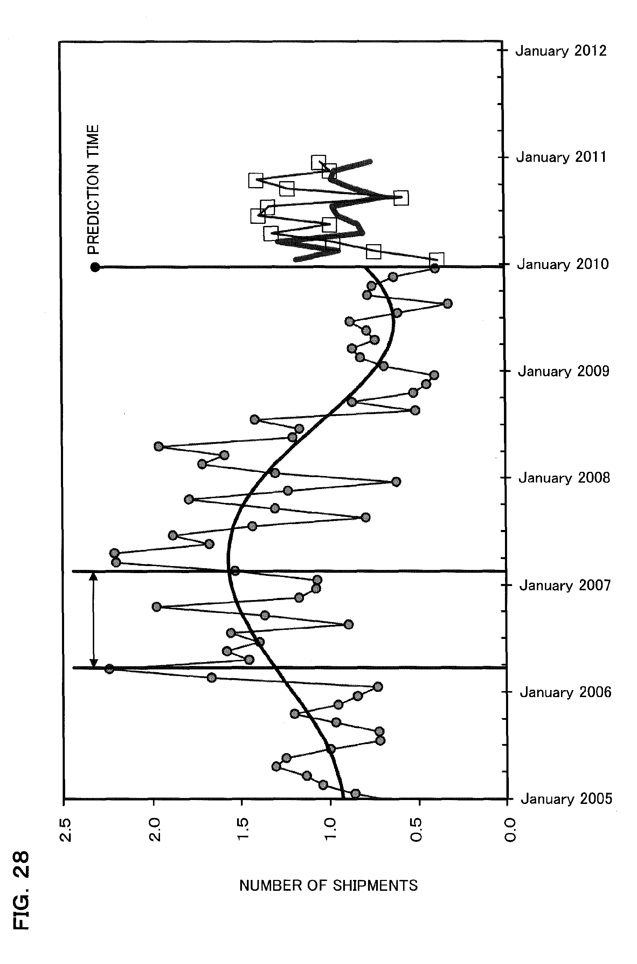

Fig 28 is a graph showing the prediction results by the control section 10 in the prediction device 1 according to the present example. The lateral axis in Fig 28 indicates the elapse of time and the longitudinal axis indicates the number of shipments. The values denoted by solid circles from January 2005 through January 2010 are actual values (after standardization), which are the same as those shown in Fig 25. The solid line in a waveform in Fig 28 indicates the signal trend. The portion indicated by the arrow in Fig 28 is the selected period, which is March 2006 through February 2007. In addition, the value indicated by the thick line between January 2010 and December 2010 in Fig 28 is the value predicted by the control section 10 on the basis of the data during the selected period. In contrast, the values denoted by open squares are the actual values (after standardization) from January 2010 through December 2010. As shown in Fig 28, though the respective prediction values are different from the actual values on the monthly basis, it can be seen from the prediction values for 12 months that the prediction was achieved with sufficient precision.

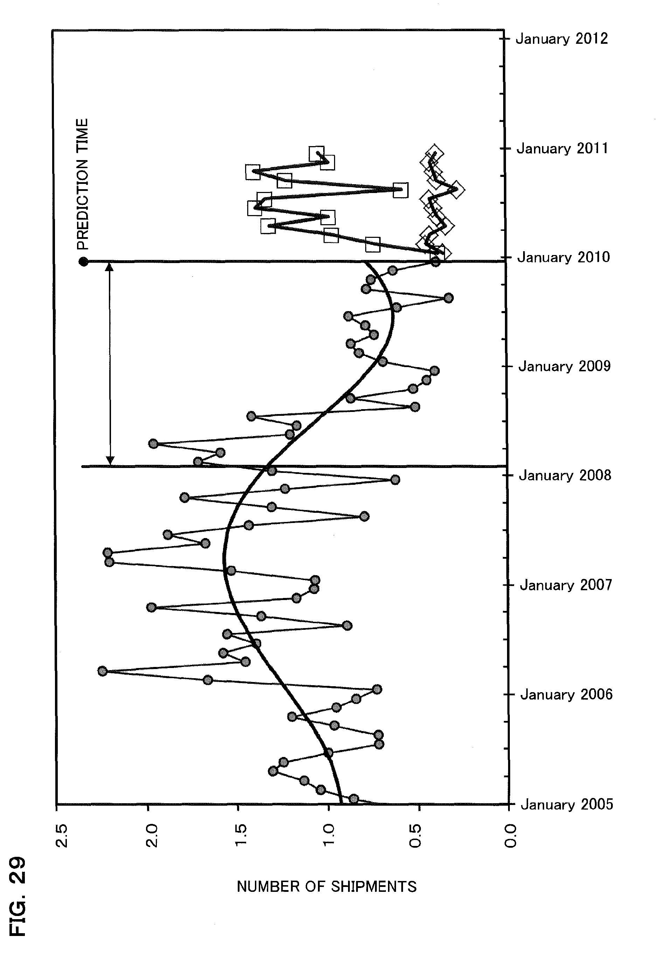

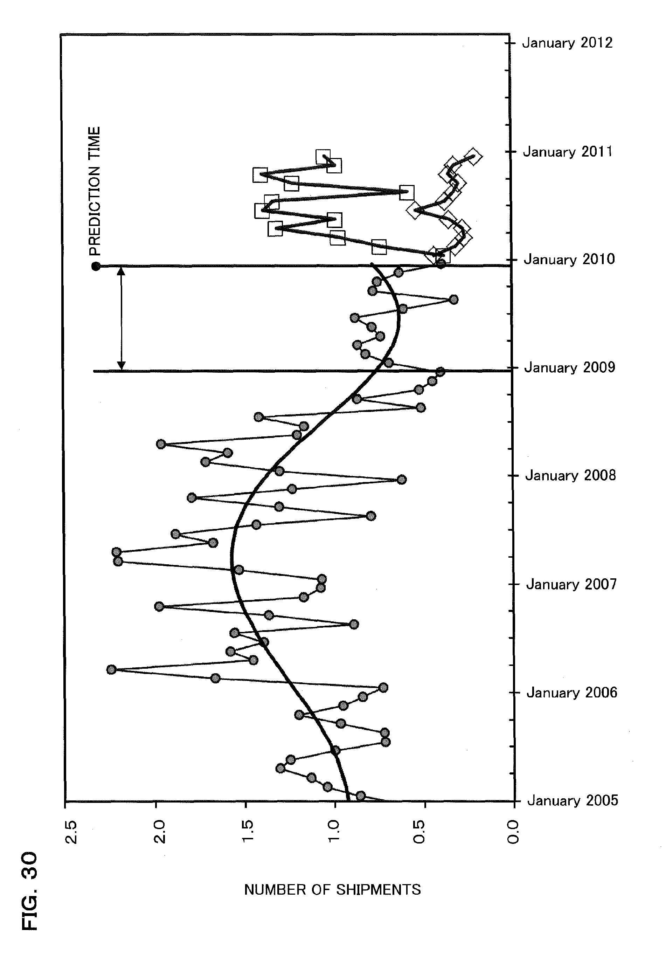

For comparison, the precision of prediction is shown in the case where the signal period is two years or one year starting from the most recent point in time instead of selection on the basis of the signal trend and the MD trend as shown in the flowchart in Fig 23. Fig 29 is a graph showing the prediction values in the case where the signal period is the most recent two years. Fig 30 is a graph showing the prediction values in the case where the signal period is the most recent one year. In Fig 29, as indicated by the arrow, the signal period is January 2008 through December 2009. Likewise, in Fig 30, the signal period is January 2009 through December 2009. Figs 29 and 30 indicate the prediction values with open diamonds. When Fig 28 is compared to Figs 29 and 30, it can be seen that the prediction values by the prediction device 1 in the present example have the highest precision.

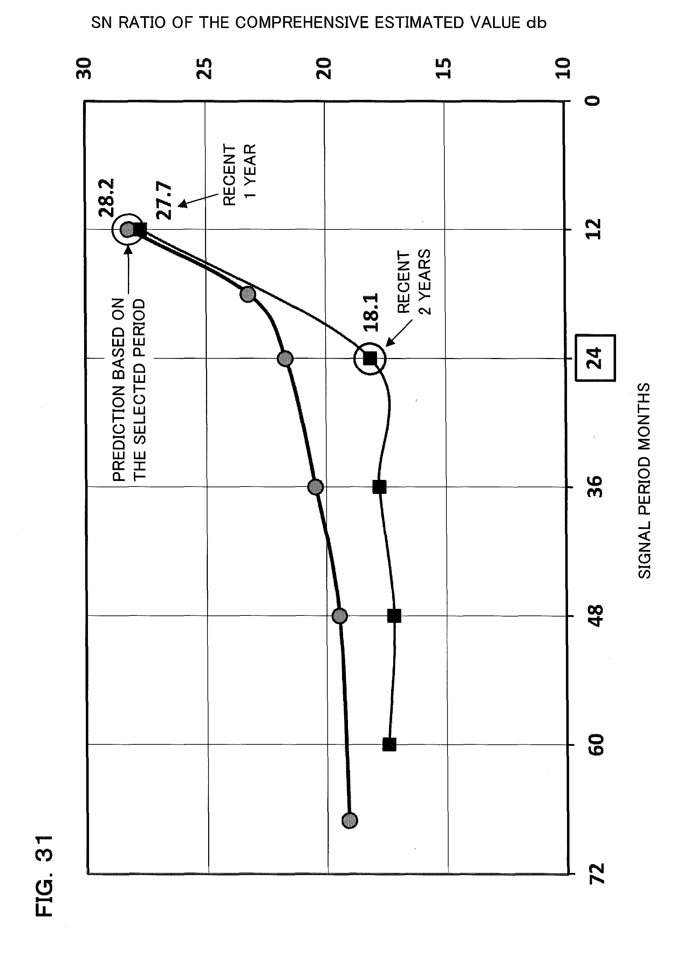

Fig 31 is a graph showing the comparison in the SN ratio of the comprehensive estimated value between different methods for selecting the signal period. The lateral axis in Fig 31 indicates the length of the selected signal period, and the longitudinal axis indicates the SN ratio of the comprehensive estimated value. Fig 31 indicates the SN ratio of the comprehensive estimated value with solid circles in the case where the prediction device 1 in this example selects the signal period and indicates the SN ratio of the comprehensive estimated value with solid squares in the case where the most recent period is used as the signal period. As shown in Fig 31, the SN ratio of the comprehensive estimated value is the highest in the case where the prediction depends on the 12 months of the selected signal period, and thus, the precision in the total estimation equation is increased.

As described above, a method taking the signal trend into consideration can be applied so as to allow the prediction device 1 to predict the number of shipments with a high precision.

The present embodiments disclosed in the above are illustrative in all aspects and should be regarded as not being limitative. The scope of the present invention is defined not by the above descriptions of the embodiments but by the claims, which are intended to include all the meanings equivalent to the claims and all the modifications within the scope.

Reference Signs List

1     Prediction device
10    Control section (operation means)
11    Recording section (recording means)
13    Input section
14    Output section
110   Database
2     Prediction program (computer program)

**Claims**

1. A prediction device provided with a recording means for chronologically recording values relating to an event with which a plurality of factors are associated and the plurality of factors associated with the values as data for each of a plurality of items by associating the data with the values, and an operation means for operating based on a value and a piece of data for an item read out from values and data recorded in the recording means, the piece of data being corresponding to the value, wherein the operation means selects a portion of items from the plurality of items on the basis of a factorial effect value indicating the strength of the correlation between the plurality of items and changes in the values, and predicts a value relating to the event during an object period to be predicted on the basis of the data of the selected portion of items, **characterized in that** the operation means comprises:

   a specifying means for specifying a trend of chronological change during the recording period of data for each item recorded in the recording means;
   a period selection means for selecting, from the recording period, a period having a trend of chronological change in data for each item, the trend being similar to a trend of chronological change in data during a corresponding period that is a predetermined period before the object period to be predicted;

an item selection means for selecting a plurality of items on the basis of a factorial effect value derived from data for the plurality of items during the period selected by the period selection means and the value a predetermined period after the period selected by the period selection means; and

a prediction means for calculating a prediction value during the object period to be predicted on the basis of data for the item selected by the item selection means during the corresponding period.

2. The prediction device according to Claim 1, **characterized in that**
the period selection means comprises:

a first calculation means for calculating a numerical value representing a similarity between the data for a plurality of items during the corresponding period and the data for a plurality of items during an arbitrary first period;

a second calculation means for calculating a numerical value representing a trend of chronological change in the numerical value calculated by the first calculation means;

an exclusion means for excluding a portion having a low similarity from the first period on the basis of the numerical value calculated by the second calculation means;

a third calculation means for calculating a numerical value representing a similarity between the data for a plurality of items during the corresponding period and the data for a plurality of items during a remaining portion after the exclusion;

a fourth calculation means for calculating a numerical value representing a trend in chronological change in the numerical value calculated by the third calculation means; and

a selection means for selecting a second period having a high similarity on the basis of the numerical value calculated by the fourth calculation means from the first period excluding the excluded portion.

3. The prediction device according to Claim 2, **characterized in that**
the first and the third calculation means are configured to calculate a Mahalanobis' generalized distance,
the second and the fourth calculation means are configured to calculate the trend in the Mahalanobis' generalized distance calculated by the first or the third calculation means on the basis of a trend model,
the exclusion means is configured to exclude a period during which the trend calculated by the second calculation means is higher than a predetermined value, and
the selection means is configured to select a period during which the trend calculated by the fourth calculation means is no greater than a predetermined value as the second period.

4. A prediction device provided with a recording means for chronologically recording values relating to an event with which a plurality of factors are associated and the plurality of factors associated with the values as data for each of a plurality of items by associating the data with the values, and an operation means for operating based on a value and a piece of data for an item read out from values and data recorded in the recording means, wherein the operation means selects a portion of items from the plurality of items on the basis of a factorial effect value indicating the strength of the correlation between the plurality of items and changes in the values, and predicts a value relating to the event during an object period to be predicted on the basis of the data of the selected portion of items, **characterized in that**
the operation means comprises:

a specifying means for specifying a trend of chronological change during the recording period of a value recorded in the recording means;

a period selection means for selecting, from the recording period, a most recent period having a trend of chronological change in the value, the trend being similar to a trend of chronological change in the value during a corresponding period that is a predetermined period before the object period to be predicted;

an item selection means for selecting a plurality of items on the basis of a factorial effect value derived from data for the plurality of items during the period selected by the period selection means and the value a predetermined period after the period selected by the period selection means; and

a prediction means for calculating a prediction value during the object period to be predicted on the basis of data for the item selected by the item selection means during the corresponding period.

5. The prediction device according to Claim 4, **characterized in that**
the period selection means comprises:

a determination means for determining an inclination of the chronological change in the value during the corresponding period;

a means for selecting, from the recording period, a first period during which the value changes at the inclination determined by the determination means;

a first calculation means for calculating a numerical value representing a similarity between the data for a plurality of items during the corresponding period and the data for a plurality of items during the first period;

a second calculation means for calculating a numerical value representing a trend of change in the numerical value calculated by the first calculation means; and

a selection means for selecting a most recent second period having a high similarity in the first period on the basis of the comparison between the numerical value calculated by the second calculation means and a threshold value.

6. The prediction device according to Claim 5, **characterized in that**
the first calculation means is configured to calculate a Mahalanobis' generalized distance,
the second calculation means is configured to calculate a trend in the Mahalanobis' generalized distance calculated by the first calculation means on the basis of a trend model, and
the selection means is configured to select a period during which the trend calculated by the second calculation means is no greater than a predetermined value as a second period.

7. The prediction device according to Claim 5 or 6, **characterized in that**
the selection means is configured to select a second period by changing a length of the second period,
the prediction device further comprises a decision means for deciding a length that maximizes a value for a precision in predicting a value of data for each item after a predetermined period of time in the second period; and
the period selection means is configured to select a second period having the length decided by the decision means.

8. A prediction method executed in a device provided with a recording means for chronologically recording values relating to an event with which a plurality of factors are associated and the plurality of factors associated with the values as data for each of a plurality of items by associating the data with the values and an operation means for operating based on a value and a piece of data for an item read out from values and data recorded in the recording means, the piece of data being corresponding to the value, wherein the operation means selects a portion of items from the plurality of items on the basis of a factorial effect value indicating the strength of a correlation between the plurality of items and changes in the values, and predicts a value relating to the event during an object period to be predicted on the basis of the data of the selected portion of items, **characterized by** comprising:

specifying a trend of chronological change during the recording period of data for each item recorded in the recording means;

selecting, from the recording period, a period having a trend of chronological change in data for each item, the trend being similar to a trend of chronological change in data during a corresponding period that is a predetermined period before the object period to be predicted;

selecting a plurality of items on the basis of a factorial effect value derived from data for the plurality of items during period selected and the value a predetermined period after the selected period; and

calculating a prediction value during the object period to be predicted from the data for the item selected during the corresponding period.

9. A prediction method executed in a device provided with a recording means for chronologically recording values relating to an event with which a plurality of factors are associated and the plurality of factors associated with the values as data for each of a plurality of items by associating the data with the values and an operation means for operating based on a value and a piece of data for an item read out from values and data recorded in the recording means, the piece of data being corresponding to the value, wherein the operation means selects a portion of items from the plurality of items on the basis of a factorial effect value indicating the strength of a correlation between the plurality of items and changes in the values, and predicts a value relating to the event during an object period to be predicted on the basis of the data of the selected portion of items, **characterized by** comprising:

the operation means

specifies a trend of chronological change during the recording period of a value recorded in the recording means,

selects, from the recording period, a most recent period having a trend of chronological change in the value, the trend being similar to a trend of chronological change in the value during the corresponding period that is a predetermined period before the objet period to be predicted,

selects a plurality of items on the basis of a factorial effect value derived from the data for the plurality of items during the selected period and the value a predetermined period after the selected period, and

calculates a prediction value during the object period to be predicted from the data for the plurality of items selected during the corresponding period.

**10.** A computer program causing a computer, having a recording means, to read out values chronologically recorded in the recording means the values being relating to an event with which a plurality of factors are associated and data for each of a plurality of items recorded in the recording means as a plurality of factors associated with the values, to select a portion of items from the plurality of items on the basis of a factorial effect value indicating the strength of a correlation between the plurality of items and changes of the value, and to predict a value relating to the event during an object period to be predicted on the basis of the data of the selected portion of items, the computer program causing the computer to execute the functions of:

a specifying means for specifying a trend of chronological change during the recording period of data for each item recorded in the recording means;

a period selection means for selecting, from the recording period, a period having a trend of chronological change in data for each item, the trend being similar to a trend of chronological change in data during a corresponding period that is a predetermined period before the object period to be predicted;

an item selection means for selecting a plurality of items on the basis of a factorial effect value derived from data for the plurality of items during the period selected by the period selection means and the value a predetermined period after the period selected by the period selection means; and

a prediction means for calculating a prediction value during the object period to be predicted on the basis of data for the plurality of items selected by the item means during the corresponding period.

**11.** A computer program causing a computer, having a recording means, to read out values chronologically recorded in the recording means the values being relating to an event with which a plurality of factors are associated and data for each of a plurality of items recorded in the recording means as a plurality of factors associated with the values, to select a portion of items from the plurality of items on the basis of a factorial effect value indicating the strength of a correlation between the plurality of items and changes of the value, and to predict a value relating to the event during an object period to be predicted on the basis of the data of the selected portion of items, the computer program causing the computer to execute the functions of:

a specifying means for specifying a trend of chronological change during the recording period of a value recorded in the recording means;

a period selection means for selecting, from the recording period, a most recent period having a trend of chronological change in the value, the trend being similar to a trend of chronological change in the value during the corresponding period that is a predetermined period before the object period to be predicted;

an item selection means for selecting a plurality of items on the basis of a factorial effect value derived from data for the plurality of items during the period selected by the period selection means and the value a predetermined period after the period selected by the period selection means; and

a prediction means for calculating a prediction value during the object period to be predicted on the basis of data for the items selected by the item selection means during the corresponding period.

FIG. 1

| MEMBER | ITEM 1 | ITEM 2 | $\cdot\ \cdot\ \cdot$ | ITEM k | SIGNAL VALUE |
|--------|--------|--------|------|--------|--------------|
| 1 | $X_{11}$ | $X_{12}$ | $\cdot\ \cdot\ \cdot$ | $X_{1k}$ | $M_1$ |
| 2 | $X_{21}$ | $X_{22}$ | $\cdot\ \cdot\ \cdot$ | $X_{2k}$ | $M_2$ |
| $\cdot$ $\cdot$ $\cdot$ | $\cdot$ $\cdot$ $\cdot$ | $\cdot$ $\cdot$ $\cdot$ | $\cdot$ $\cdot$ $\cdot$ | $\cdot$ $\cdot$ $\cdot$ | $\cdot$ $\cdot$ $\cdot$ |
| $n$ | $X_{n1}$ | $X_{n2}$ | $\cdot\ \cdot\ \cdot$ | $X_{nk}$ | $M_n$ |

FIG. 2

| $\beta , \eta$ | ITEM 1 | ITEM 2 | $\cdots$ | ITEM k |
|---|---|---|---|---|
| PROPORTIONALITY CONSTANT $\beta$ | $\beta_1$ | $\beta_2$ | $\cdots$ | $\beta_k$ |
| SN RATIO ( THE SQUARE RATIO ) | $\eta_1$ | $\eta_2$ | $\cdots$ | $\eta_k$ |

FIG. 3

| MEMBER | ACTUAL VALUE OF SIGNAL VALUE $M$ | COMPREHENSIVE ESTIMATED VALUE $\hat{M}$ |
|---|---|---|
| 1 | $M_1$ | $\hat{M}_1$ |
| 2 | $M_2$ | $\hat{M}_2$ |
| . . . | . . . | . . . |
| $n$ | $M_n$ | $\hat{M}_n$ |

FIG. 4

FIG. 5

FIG. 6

NUMBER OF
THE ITEMS

(1)            (2)

SIGNAL
VALUE

A TIME
DIFFERENCE

PERIOD OF THE
PREDICTION
OBJECT

## FIG. 7

ITEM 1

SIGNAL VALUE X

ITEM 1

SIGNAL VALUE X

FIG. 8

MAX

FACTORIAL EFFECT VALUE db

ITEM NUMBER

THE INITIAL VALUE

3  2  1  0  -1  -2

1 2 3 4 5 6 7 8 9 10 11 12 13 14 15 16 17 18 19 20 21 22 23 24 25 26 27 28 29 30 31 32 33 34 35 36

FIG. 9

**FIG. 10**

| GENERATE TIME DIFFERENCE MODEL |
| PERFORM LINEAR CONVERSION |
| DERIVE THE FACTORIAL EFFECT VALUE |
| SELECT SIGNAL PERIOD |
| CALCULATE FOR EACH VALUE OF THE NUMBER OF ITEMS THE STRENGTH OF CORRELATION OF THE PREDICTION OBJECT |
| DETERMINE THE NUMBER OF ITEMS |
| SELECT ITEMS |
| PREDICT VALUE OF PREDICTION OBJECT |

1
PREDICTION DEVICE

10
CONTROL SECTION

11
RECORDING SECTION

110
DB

2
PREDICTION PROGRAM

12
TEMPORARY STORAGE SECTION

13
INPUT SECTION

14
OUTPUT SECTION

## FIG. 11

PREDICTION DEVICE  1

```
          ( START )
              |
┌──────────────────────────┐  S101
│   RECORD THE DATA OF THE  │
│  PREDICTION OBJECT AND THE│
│      PLURALITY OF ITEMS   │
└──────────────────────────┘
              |
┌──────────────────────────┐  S102
│ GENERATE A TIME DIFFERENCE MODEL │
└──────────────────────────┘
              |
┌──────────────────────────┐  S103
│  PERFORM LINEAR CONVERSION│
└──────────────────────────┘
              |
┌──────────────────────────┐  S104
│   SELECT THE SIGNAL PERIOD│
└──────────────────────────┘
              |
┌──────────────────────────┐  S105
│ CALCULATE THE PROPORTIONALITY │
│   CONSTANT AND THE SN RATIO   │
└──────────────────────────┘
              |
┌──────────────────────────┐  S106
│  CALCULATE THE ESTIMATED VALUE │
│    FOR THE PREDICTION OBJECT   │
└──────────────────────────┘
              |
┌──────────────────────────┐  S107
│  CALCULATE THE COMPREHENSIVE   │
│       ESTIMATED VALUE          │
└──────────────────────────┘
              |
┌──────────────────────────┐  S108
│   CALCULATE THE SN RATIO OF THE │
│ COMPREHENSIVE ESTIMATED VALUE   │
└──────────────────────────┘
              |
┌──────────────────────────┐  S109
│ DERIVE THE FACTORIAL EFFECT VALUE│
└──────────────────────────┘
              |
┌──────────────────────────┐  S110
│ CALCULATE FOR EACH VALUE OF THE  │
│   NUMBER OF ITEMS THE SN RATIO   │
│      OF THE COMPREHENSIVE        │
│       ESTIMATED VALUE            │
└──────────────────────────┘
              |
┌──────────────────────────┐  S111
│ DETERMINE THE NUMBER OF ITEMS   │
└──────────────────────────┘
              |
┌──────────────────────────┐  S112
│        SELECT ITEMS             │
└──────────────────────────┘
              |
┌──────────────────────────┐  S113
│  CALCULATE A PREDICTION VALUE   │
└──────────────────────────┘
              |
          ( END )
```

# FIG. 12

START

S401

PERFORM A CONVERSION
FOR SIGNAL VALUES

S402

CALCULATE THE SIGNAL TREND

S403

SPECIFY THE TREND OF SIGNAL VALUES
DURING CORRESPONDING PERIOD

S404

SELECT SIGNAL VALUES AND DATA
FOR EACH ITEM DURING PORTION
CORRESPONDING TO SPECIFIED TREND

S405

CALCULATE MD OF THE DATA
FOR ITEMS SELECTED

S406

CALCULATE TREND OF MD

S407

EXCLUDE A PORTION IN WHICH
THE MD TREND IS GREATER THAN
A PREDETERMINED VALUE AS A WHOLE

S408

RECALCULATE THE MD
AND THE MD TREND

S409

SELECT A PORTION HAVING MD TREND BEING
EQUAL TO THE PREDETERMINED VALUE
OR SMALLER AS A SIGNAL PERIOD

END

# FIG. 13

```
                    ( START )
                        |
                        |                  S401
    ┌───────────────────────────────────────┐
    │           PERFORM A CONVERSION         │
    │            FOR SIGNAL VALUES           │
    └───────────────────────────────────────┘
                        |
                        |                  S402
    ┌───────────────────────────────────────┐
    │        CALCULATE THE SIGNAL TREND      │
    └───────────────────────────────────────┘
                        |
                        |                  S403
    ┌───────────────────────────────────────┐
    │     SPECIFY THE TREND OF SIGNAL VALUES │
    │        DURING CORRESPONDING PERIOD     │
    └───────────────────────────────────────┘
                        |
                        |                  S404
    ┌───────────────────────────────────────┐
    │        SELECT SIGNAL VALUES AND DATA   │
    │         FOR EACH ITEM DURING PORTION   │
    │      CORRESPONDING TO SPECIFIED TREND  │
    └───────────────────────────────────────┘
                        |
                        |                  S405
    ┌───────────────────────────────────────┐
    │          CALCULATE MD OF THE DATA      │
    │            FOR ITEMS SELECTED          │
    └───────────────────────────────────────┘
                        |
                        |                  S406
    ┌───────────────────────────────────────┐
    │           CALCULATE TREND OF MD        │
    └───────────────────────────────────────┘
                        |
                        |                  S407
    ┌───────────────────────────────────────┐
    │        EXCLUDE A PORTION IN WHICH      │
    │      THE MD TREND IS GREATER THAN      │
    │    A PREDETERMINED VALUE AS A WHOLE    │
    └───────────────────────────────────────┘
                        |
                        |                  S408
    ┌───────────────────────────────────────┐
    │           RECALCULATE THE MD           │
    │            AND THE MD TREND            │
    └───────────────────────────────────────┘
                        |
                        |                  S410
    ┌───────────────────────────────────────┐
    │     SELECT A PORTION HAVING MD TREND   │
    │  BEING EQUAL TO A PREDETERMINED VALUE  │
    │     OR SMALLER AND MD BEING EQUAL      │
    │        TO A PREDETERMINED VALUE        │
    │      OR SMALLER AS A SIGNAL PERIOD     │
    └───────────────────────────────────────┘
                        |
                    (  END  )
```

F I G. 1 4

| Name of Items |
|---|
| January |
| February |
| March |
| April |
| May |
| June |
| July |
| August |
| September |
| October |
| November |
| December |
| · · · |
| Japan unemployment rate (%) |
| Domestic bank lending rate (%) |
| Japan manufacturing orders (1 billion yen) |
| Japan gas oil price (yen/liter) amount (1 billion yen) |
| At the end Nikkei Stock Average |
| Exchange rate (end of the month, against the U.S.dollar ) |
| Japan export amount (one billion yen) |
| CI Leading Index |
| CI Coincident Index |
| CI Lagging Index |
| DI Leading Index |
| DI Coincident Index |
| DI Lagging Index |
| DI Cumulated Leading Index |
| DI Cumulated Coincident Index |
| DI Cumulated Lagging Index |
| Japan starts new housing number |
| Japan construction orders ( one billion yen ) |
| · · · |
| Japan export  marine container |
| Japan company bankruptcies |
| Japan ordinary vehicles new car sales ( units ) |
| Japan truck new vehicle sales ( units ) |

FIG. 15

January 2012
January 2011
January 2010
January 2009
January 2008
January 2007
January 2006
January 2005
January 2004
January 2003
January 2002
January 2001
January 2000
January 1999
January 1998

3.0　2.5　2.0　1.5　1.0　0.5　0.0

TREND OF THE NUMBER OF SHIPMENT
(TREND OF SIGNAL VALUE)

FIG. 16

TREND OF THE NUMBER OF SHIPMENT
(TREND OF SIGNAL VALUE)

FIG. 17

FIG. 18

AFTER EXCLUDING A PORTION IN WHICH THE MD TREND IS GREATER THAN "1"

EXTRACTED PORTION OF PERIOD ON CONDITION THAT MD TREND HAS "1" OR SMALLER

January 2012
January 2011
January 2010
January 2009
January 2008
January 2007
January 2006
January 2005
January 2004
January 2003
January 2002
January 2001
January 2000
January 1999
January 1998

2.0  1.0  0.0

MD CONSIDERED
NONLINEAR
CONVERSION

FIG. 19

FIG. 20

AFTER EXCLUDING A PORTION IN WHICH THE MD TREND IS GREATER THAN "1"

EXTRACTED PORTION OF PERIOD ON CONDITION THAT MD TREND HAS "1" OR SMALLER

MD CONSIDERED NONLINEAR CONVERSION

MD CONSIDERED NONLINEAR CONVERSION

FIG. 21

FIG. 22

SIGNAL PERIOD MONTHS

**FIG. 23**

```
                    ( START )
                         |
                         |  S41
  +----------------------------------------------+
  |           PERFORM A CONVERSION               |
  |             FOR SIGNAL VALUES                |
  +----------------------------------------------+
                         |
                         |  S42
  +----------------------------------------------+
  |          CALCULATE THE SIGNAL TREND          |
  +----------------------------------------------+
                         |
                         |  S43
  +----------------------------------------------+
  |       SPECIFY THE TREND OF SIGNAL VALUES     |
  |          DURING CORRESPONDING PERIOD         |
  +----------------------------------------------+
                         |
                         |  S44
  +----------------------------------------------+
  |          SELECT SIGNAL VALUES AND DATA       |
  |         FOR EACH ITEM DURING A PORTION       |
  |       CORRESPONDING TO SPECIFIED TREND       |
  +----------------------------------------------+
                         |
                         |  S45
  +----------------------------------------------+
  |           CALCULATE MD OF THE DATA           |
  |             FOR ITEMS SELECTED               |
  +----------------------------------------------+
                         |
                         |  S46
  +----------------------------------------------+
  |            CALCULATE TREND OF MD             |
  +----------------------------------------------+
                         |
                         |<-----------------------+
                         |  S47                   |
  +----------------------------------------------+|
  |        SELECT A PORTION IN THE ORDER OF      ||
  |         CLOSENESS TO THE PERIOD TO BE        ||
  |       PREDICTED AMONG SELECTED PORTIONS      ||
  +----------------------------------------------+|
                         |                        |
                         | S48                    |
                       /     \                    |
                 /  MD TREND IS GREATER  \        |
              <  THAN A PREDETERMINED VALUE > YES-+
                 \ THROUGHOUT THE ENTIRETY OF /
                   \ THE SELECTED PORTION? /
                       \     /
                         | NO
                         |  S49
  +----------------------------------------------+
  |     SELECT A PORTION HAVING A LENGTH OF      |
  |    THE CLOSEST PERIOD TO BE PREDICTED        |
  |            AS A SIGNAL PERIOD                |
  +----------------------------------------------+
                         |
                      ( END )
```

FIG. 24

| Name of Items |
|---|
| January |
| February |
| March |
| April |
| May |
| June |
| July |
| August |
| September |
| October |
| November |
| December |
| . <br> . <br> . |
| Japan unemployment rate (%) |
| Domestic bank lending rate (%) |
| Japan manufacturing orders (1 billion yen) |
| Japan gas oil price (yen/liter) amount (1 billion yen) |
| At the end Nikkei Stock Average |
| Exchange rate (end of the month, against the U.S.dollar ) |
| Japan export amount (one billion yen) |
| CI Leading Index |
| CI Coincident Index |
| CI Lagging Index |
| DI Leading Index |
| DI Coincident Index |
| DI Lagging Index |
| DI Cumulated Leading Index |
| DI Cumulated Coincident Index |
| DI Cumulated Lagging Index |
| Japan starts new housing number |
| Japan construction orders ( one billion yen ) |
| . <br> . <br> . |
| Japan export  marine container |
| Japan company bankruptcies |
| Japan ordinary vehicles new car sales ( units ) |
| Japan truck new vehicle sales ( units ) |

FIG. 25

FIG. 26

FIG. 27

FIG. 28

FIG. 29

EP 2 869 249 A1

FIG. 30

# FIG. 31

PREDICTION BASED ON THE SELECTED PERIOD → **28.2**

**27.7**
RECENT 1 YEAR

**18.1**
RECENT 2 YEARS

SIGNAL PERIOD MONTHS

SN RATIO OF THE COMPREHENSIVE ESTIMATED VALUE db

EP 2 869 249 A1

**INTERNATIONAL SEARCH REPORT**

| International application No. |
|---|
| PCT/JP2013/067386 |

A. CLASSIFICATION OF SUBJECT MATTER
*G06Q10/04*(2012.01)i

According to International Patent Classification (IPC) or to both national classification and IPC

B. FIELDS SEARCHED

Minimum documentation searched (classification system followed by classification symbols)
G06Q10/04

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho    1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-176418 A (Mitsubishi Electric Corp.), 12 August 2010 (12.08.2010), entire text; all drawings (Family: none) | 1-11 |
| A | JP 2007-141036 A (Ricoh Co., Ltd.), 07 June 2007 (07.06.2007), entire text; all drawings & US 2007/0118421 A1 | 1-11 |
| A | JP 2001-22729 A (Hitachi, Ltd.), 26 January 2001 (26.01.2001), entire text; all drawings (Family: none) | 1-11 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 July, 2013 (22.07.13) | 30 July, 2013 (30.07.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/067386

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-211684 A  (Toshiba Corp.), 24 September 2010 (24.09.2010), entire text; all drawings (Family: none) | 1-11 |
| A | Kazuo TATEBAYASHI, Nyumon MT System, 1st edition, JUSE Press, Ltd., 04 December 2008 (04.12.2008), pages 58 to 65, 73 to 90 | 1-11 |
| A | Kishio TAMURA, Yokuwakaru MT System, 1st edition, Japanese Standards Association, 25 August 2009 (25.08.2009), pages 103 to 110, 116 to 118 | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3141164 B

**Non-patent literature cited in the description**

- **KAZUO TATEBAYASHI ; SHOICHI TEJIMA ; YOSHIKO HASEGAWA.** Nyumon MT System. JUSE Press, Ltd, 04 December 2008

- **YUKIYA MASUDA.** Study of T-Method to mitigate Non-Linear Phenomena. *17th Conference of Quality Engineering Studies, Article Collection,* 2009, 422-425